(19) Europäisches Patentamt
European Patent Office
Office européen des brevets

(11) **EP 4 443 352 A1**

(12) **EUROPÄISCHE PATENTANMELDUNG**

(43) Veröffentlichungstag:
**09.10.2024 Patentblatt 2024/41**

(21) Anmeldenummer: **23166776.7**

(22) Anmeldetag: **05.04.2023**

(51) Internationale Patentklassifikation (IPC):
**G06Q 10/04** (2023.01)    **G06Q 50/06** (2024.01)

(52) Gemeinsame Patentklassifikation (CPC):
**G06Q 10/04; G06Q 50/06**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder:
• Primetals Technologies Germany GmbH
  91058 Erlangen (DE)
• Primetals Technologies Austria GmbH
  4031 Linz (AT)

(72) Erfinder:
• **Weinzierl, Klaus**
  **90480 Nürnberg (DE)**
• **Becker, Gerd**
  **91080 Marloffstein (DE)**
• **Fleischanderl, Alexander**
  **4645 Gruenau (AT)**

(74) Vertreter: **Metals@Linz**
  **Primetals Technologies Austria GmbH**
  **Intellectual Property Upstream IP UP**
  **Turmstraße 44**
  **4031 Linz (AT)**

(54) **KOSTENEFFIZIENTER BETRIEB EINER DRI-ANLAGE UND WEITERER TEILSYSTEME EINES GESAMTSYSTEMS**

(57)    Ein Gesamtsystem umfasst als Teilsysteme eine DRI-Anlage (1), eine Elektrolyseanlage (4), einen Wasserstoffspeicher (6) und eine Versorgungseinrichtung (7). Die DRI-Anlage (1) und die Elektrolyseanlage (4) sind zur Übertragung elektrischer Energie mit einem elektrischen Versorgungsnetz (2) verbunden, die DRI-Anlage (1), die Elektrolyseanlage (4) und der Wasserstoffspeicher (6) zum Transfer von Wasserstoff, die DRI-Anlage (1) und die Versorgungseinrichtung (7) zum Zuführen von Erdgas und/oder Ammoniak zur DRI-Anlage (1). Einer Steuereinrichtung (8) sind aktuelle Zustände (Z1, Z4, Z6, Z7) der Teilsysteme (1, 4, 6, 7), für einen Prognosehorizont (PH) zumindest ein gewünschter Produktionsplan (PP) der DRI-Anlage (1), ein zumindest erwarteter Preis (B1) für über das elektrische Versorgungsnetz (2) bezogene elektrische Energie und ein zumindest erwarteter Preis (P2, B3) für das Erdgas und/oder den Ammoniak bekannt. Die Steuereinrichtung (8) setzt für den Prognosehorizont (PH) Betriebsweisen (B1, B4, B6, B7) für die Teilsysteme (1, 4, 6, 7) an und ermittelt für die Teilsysteme (1, 4, 6, 7) unter Verwertung der aktuellen Zustände (Z1, Z4, Z6, Z7) und der Betriebsweisen (B1, B4, B6, B7) erwartete finale Zustände (Z1', Z4', Z6', Z7'). Die Steuereinrichtung 8 variiert für den Prognosehorizont (PH) die angesetzten Betriebsweisen (B1, B4, B6, B7) und hierauf aufbauend die erwarteten finalen Zustände (Z1', Z4', Z6', Z7'), so dass eine Kostenfunktion (K) minimiert wird. In die Kostenfunktion (K) gehen die Kosten für den Bezug elektrischer Energie aus dem elektrischen Versorgungsnetz (2) und für den Verbrauch an Erdgas und/oder Ammoniak und/oder die Betriebsweisen (B1, B4, B6, B7) der Teilsysteme (1, 4, 6, 7) und/oder Bewertungen der erwarteten finalen Zustände (Z1', Z4', Z6', Z7') der Teilsysteme (1, 4, 6, 7) und/oder eine Produktivität der DRI-Anlage (1) ein. Die Steuereinrichtung (8) betreibt die Teilsysteme (1, 4, 6, 7) zumindest für den Beginn des Prognosehorizonts (PH) gemäß der variierten Betriebsweisen (B1, B4, B6, B7).

FIG 1

**Beschreibung**

Bezeichnung der Erfindung

Gebiet der Technik

Die vorliegende Erfindung geht aus von einem Betriebsverfahren für ein Gesamtsystem,

- wobei das Gesamtsystem als Teilsysteme eine DRI-Anlage, eine Elektrolyseanlage und einen Wasserstoffspeicher umfasst,
- wobei die DRI-Anlage und die Elektrolyseanlage zur Übertragung elektrischer Energie direkt oder indirekt mit einem elektrischen Versorgungsnetz verbunden sind,
- wobei die DRI-Anlage, die Elektrolyseanlage und der Wasserstoffspeicher zum Transfer von Wasserstoff direkt oder indirekt miteinander verbunden sind.

Die vorliegende Erfindung geht weiterhin aus von einem Steuerprogramm für eine Steuereinrichtung für ein Gesamtsystem,

- wobei das Gesamtsystem als Teilsysteme eine DRI-Anlage, eine Elektrolyseanlage und einen Wasserstoffspeicher umfasst,
- wobei die DRI-Anlage und die Elektrolyseanlage zur Übertragung elektrischer Energie direkt oder indirekt mit einem elektrischen Versorgungsnetz verbunden sind,
- wobei die DRI-Anlage, die Elektrolyseanlage und der Wasserstoffspeicher zum Transfer von Wasserstoff direkt oder indirekt miteinander verbunden sind,
- wobei das Steuerprogramm Maschinencode umfasst, der von der Steuereinrichtung abarbeitbar ist,
- wobei die Abarbeitung des Maschinencodes durch die Steuereinrichtung bewirkt, dass die Steuereinrichtung das Gesamtsystem gemäß einem derartigen Betriebsverfahren steuert.

Die vorliegende Erfindung geht weiterhin aus von einer Steuereinrichtung für ein Gesamtsystem,

- wobei das Gesamtsystem als Teilsysteme eine DRI-Anlage, eine Elektrolyseanlage und einen Wasserstoffspeicher umfasst,
- wobei die DRI-Anlage und die Elektrolyseanlage zur Übertragung elektrischer Energie direkt oder indirekt mit einem elektrischen Versorgungsnetz verbunden sind,
- wobei die DRI-Anlage, die Elektrolyseanlage und der Wasserstoffspeicher zum Transfer von Wasserstoff direkt oder indirekt miteinander verbunden sind,
- wobei die Steuereinrichtung mit einem derartigen Steuerprogramm programmiert ist, so dass die Steuereinrichtung bei Abarbeitung des Maschinencodes des Steuerprogramms das Gesamtsystem gemäß einem derartigen Betriebsverfahren steuert.

Die vorliegende Erfindung geht weiterhin aus von einem Gesamtsystem,

- wobei das Gesamtsystem als Teilsysteme eine DRI-Anlage, eine Elektrolyseanlage und einen Wasserstoffspeicher umfasst,
- wobei die DRI-Anlage und die Elektrolyseanlage zur Übertragung elektrischer Energie direkt oder indirekt mit einem elektrischen Versorgungsnetz verbunden sind,
- wobei die DRI-Anlage, die Elektrolyseanlage und der Wasserstoffspeicher zum Transfer von Wasserstoff direkt oder indirekt miteinander verbunden sind,
- wobei das Gesamtsystem eine derartige Steuereinrichtung umfasst, die bei Abarbeitung des Maschinencodes eines derartigen Steuerprogramms das Gesamtsystem gemäß einem derartigen Betriebsverfahren steuert.

Stand der Technik

Die genannten Gegenstände sind - allerdings nicht speziell für eine DRI-Anlage, sondern nur für andere Anlagen der Stahlindustrie - beispielsweise aus dem Aufsatz "Grüne Energieversorgung der Stahlindustrie", Stahl und Eisen, August 2022, Seiten 22 bis 24 bekannt.
Aus der KR 2019 0136300 A ist ein industrieller Prozess bekannt, dem ein Energiespeicher zugeordnet ist. Der industrielle Prozess kann ein mehr oder minder komplexer technischer Prozess sein, der mehrere aufeinander aufbauende und miteinander zusammenwirkende Teilprozesse umfasst. Der industrielle Prozess weist verschiedene Arten von Lasten auf, nämlich Lasten, die stets mit Energie versorgt werden müssen, Lasten, die abgeschaltet werden können, und Lasten, bei denen der Energieverbrauch einstellbar ist. Es wird der tatsächliche Energieverbrauch der verschiedenen Komponenten der industriellen Anlage bestimmt. Der Betrieb der industriellen Anlage und des Energiespeichers werden derart aufeinander abgestimmt, dass sich minimale Kosten ergeben.

Aus der US 10 354 297 B2 ist eine Anordnung mit einem häuslichen Verbraucher, einem Energieerzeuger und einem Energiespeicher bekannt. Der Betrieb des Energiespeichers kann unter Berücksichtigung eines geplanten Energieverbrauchs des Verbrauchers ermittelt werden. Weiterhin können auch Wetterdaten mit verwertet werden. Auch können Preisinformationen für das Beziehen elektrische Energie aus einem Versorgungsnetz und für das Einspeisen elektrischer Energie in das Versorgungsnetz berücksichtigt werden.

Aus der TW 201 235 124 A ist bekannt, dass der Energieverbrauch einer Anlage der Stahlindustrie - konkret ist eine Walzstraße genannt - bei bekannter Betriebsweise der Anlage der Stahlindustrie mit guter Genauigkeit vorhergesagt werden kann.

Aus der US 8 288 888 B2 ist eine Elektrolyseanlage bekannt, die mit einem Windpark gekoppelt ist. Zusätzlich können weitere Lasten und weitere Energiequellen vorhanden sein. Die weiteren Lasten und Energiequellen können auch die Form von elektrischen Energiespeichern aufweisen. Der mittels der Elektrolyseanlage erzeugte Wasserstoff kann an ein angegliedertes Chemiewerk oder eine Raffinerie weitergeleitet werden.

Zusammenfassung der Erfindung

In der Vergangenheit wurden bei der Ermittlung des Betriebs von Anlagen der Stahlindustriezwar die hierbei anfallenden Kosten - auch die hierbei anfallenden Energiekosten - berücksichtigt. Dies gilt gleichermaßen für DRI-Anlagen und andere Anlagen der Stahlindustrie. Die Berücksichtigung erfolgte jedoch nur in dem Sinne, dass der Gesamtbedarf an elektrischer Energie und die dadurch entstehenden Kosten für die elektrische Energie berücksichtigt wurden. Im Zuge der Hinwendung zu regenerativen Energien muss in erheblich stärkerem Ausmaß die Verfügbarkeit elektrischer Energie (einschließlich der zeitlichen Schwankungen der für die elektrische Energie anfallenden Kosten) berücksichtigt werden, da die Verfügbarkeit und damit auch die Kosten elektrischer Energie zukünftig deutlich größeren Schwankungen als in der Vergangenheit unterworfen sein wird.

Die Kosten für den Betrieb des Gesamtsystems werden jedoch von einer Vielzahl weiterer Faktoren bestimmt. Die Vorgehensweisen des Standes der Technik sind daher nur suboptimal.

In dem oben genannten Fachaufsatz ist zwar ausgeführt, dass die dortige Anlage der Stahlindustrie, die Elektrolyseanlage und ein elektrischer Energiespeicher mittels eines intelligenten Energiemanagementsystems gesteuert und betrieben werden. Es finden sich jedoch keine näheren Ausführungen zur Implementierung des intelligenten Energiemanagementsystems.

Die Aufgabe der vorliegenden Erfindung besteht darin, Möglichkeiten zu schaffen, mittels derer ein kosteneffizienter Betrieb eines Gesamtsystems erreicht wird, das als Teilsysteme eine DRI-Anlage, eine Elektrolyseanlage und einen Wasserstoffspeicher umfasst.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 9.

Zunächst umfasst das Gesamtsystem - zusätzlich zu den obenstehend genannten Teilsystemen - als (weiteres) Teilsystem eine Versorgungseinrichtung. Die DRI-Anlage und die Versorgungseinrichtung sind zum Zuführen von Erdgas und/oder Ammoniak zur DRI-Anlage miteinander verbunden. Weiterhin wird ein Betriebsverfahren der eingangs genannten Art dadurch ausgestaltet,

- dass einer das Gesamtsystem steuernden Steuereinrichtung als aktuelle Zustände ein aktueller Anlagenzustand der DRI-Anlage, ein aktueller Elektrolysenzustand der Elektrolyseanlage, ein aktueller Wasserstoffspeicherzustand des Wasserstoffspeichers und ein aktueller Versorgungszustand der Versorgungseinrichtung bekannt sind,
- dass der Steuereinrichtung für einen Prognosehorizont zumindest ein gewünschter Produktionsplan der DRI-Anlage, ein zumindest erwarteter Preis für über das elektrische Versorgungsnetz bezogene elektrische Energie und ein zumindest erwarteter Preis für das Erdgas und/oder den Ammoniak bekannt sind,
- dass die Steuereinrichtung für den Prognosehorizont Betriebsweisen ansetzt und für das Ende des Prognosehorizonts erwartete finale Zustände ermittelt,
- dass die Betriebsweisen eine Anlagenbetriebsweise für die DRI-Anlage, eine Elektrolysenbetriebsweise für die Elektrolyseanlage, eine Wasserstoffspeicherbetriebsweise für den Wasserstoffspeicher und eine Versorgungsbetriebsweise für die Versorgungseinrichtung umfassen,
- dass die erwarteten finalen Zustände einen unter Verwertung des aktuellen Anlagenzustands und der angesetzten Anlagenbetriebsweise ermittelten finalen Anlagenzustand, einen unter Verwertung des aktuellen Elektrolysenzustands und der angesetzten Elektrolysenbetriebsweise ermittelten erwarteten finalen Elektrolysenzustand, einen unter Verwertung des aktuellen Wasserstoffspeicherzustands und der angesetzten Wasserstoffspeicherbetriebsweise ermittelten erwarteten finalen Wasserstoffspeicherzustand und einen unter Verwertung des aktuellen Versorgungszustands und der angesetzten Versorgungsbetriebsweise ermittelten erwarteten finalen Versorgungszustand umfassen,

- dass die Steuereinrichtung für den Prognosehorizont die angesetzten Betriebsweisen und hierauf aufbauend die erwarteten finalen Zustände variiert, so dass eine Kostenfunktion minimiert wird,
- dass in die Kostenfunktion die Kosten für den Bezug elektrischer Energie aus dem elektrischen Versorgungsnetz und für den Verbrauch an Erdgas und/oder Ammoniak und/oder die Betriebsweisen der DRI-Anlage, der Elektrolyseanlage, des Wasserstoffspeichers und/oder der Versorgungseinrichtung und/oder Bewertungen der erwarteten finalen Zustände und/oder eine Produktivität der DRI-Anlage eingehen und
- dass die Steuereinrichtung die Teilsysteme zumindest für den Beginn des Prognosehorizonts gemäß der jeweiligen variierten Betriebsweise betreibt.

Die Erfindung geht aus von der Erkenntnis, dass eine DRI-Anlage alternativ mit Wasserstoff, Erdgas oder Ammoniak betrieben werden kann und demzufolge auch der Verbrauch an Erdgas und Ammoniak und die damit verbundenen Kosten und auch die Kosten für den Betrieb der entsprechenden Versorgungseinrichtung mit in die Optimierung einbezogen werden können.

Die Versorgungseinrichtung kann nach Bedarf aufgebaut sein. Beispielsweise kann die Versorgungseinrichtung, soweit es Erdgas betrifft, einen Tank für das Erdgas umfassen und/oder an ein Gasversorgungsnetz angeschlossen sein. Alternativ oder zusätzlich kann die Versorgungseinrichtung, soweit es Ammoniak betrifft, eine Erzeugungseinrichtung für Ammoniak umfassen. Dies ist aber nicht zwingend erforderlich. Auch eine Speichereinrichtung für Ammoniak ist möglich.

Der Anlagenzustand der DRI-Anlage beschreibt in dem erforderlichen Ausmaß den Zustand der DRI-Anlage. Der Anlagenzustand kann beispielsweise umfassen, welche Materialien sich in welchem Zustand momentan in der DRI-Anlage befinden und in welchem Zustand sich Aggregate der DRI-Anlage befinden.

Ein aktueller Elektrolysenzustand der Elektrolyseanlage kann beispielsweise, sofern eine entsprechende Abhängigkeit der Effizienz der Wasserstoffproduktion vom Stromeinsatz besteht, eine Temperatur der Elektrolyseanlage umfassen. Auch kann der Elektrolysenzustand andere variable Größen umfassen, beispielsweise Konzentrationen an Elektrolyten.

Ein aktueller Wasserstoffspeicherzustand beschreibt in dem erforderlichen Ausmaß den Zustand des Wasserstoffspeichers. Der Wasserstoffspeicherzustand kann insbesondere einen Füllgrad oder Füllstand umfassen, also in welchem Umfang (prozentual und/oder absolut) der Wasserstoffspeicher gefüllt ist.

Der aktuelle Versorgungszustand beschreibt in dem erforderlichen Ausmaß den Zustand der Versorgungseinrichtung. Soweit die Versorgungseinrichtung Tanks aufweist, kann der Zustand beispielsweise - analog zum Wasserstoffspeicher - Füllgrade oder Füllstände der Tanks umfassen. Gegebenenfalls können auch weitere Daten wie beispielsweise maximale Füll- oder Entnahmeraten oder Verlustraten oder Lieferraten definiert sein. Auch kann der Versorgungszustand einen Verschleißgrad der Versorgungseinrichtung umfassen.

Der Produktionsplan der DRI-Anlage legt fest, in welchem Ausmaß mittels der DRI-Anlage Eisen bzw. Eisenschwamm erzeugt werden soll. Gegebenenfalls legt der Produktionsplan auch fest, welche Zwischenprodukte erzeugt werden sollen. Weiterhin kann der Produktionsplan auch geplante Stillstände der DRI-Anlage oder von Teilen der DRI-Anlage festlegen. Ein geplanter Stillstand kann beispielsweise zu Wartungszwecken erforderlich sein.

Die Formulierung, dass die Preise für die elektrische Energie bzw. das Erdgas und/oder Ammoniak "zumindest erwartet" sind, umfasst einerseits den Fall, dass es sich um eine auf bekannten tatsächlichen Sachverhalten basierende Schätzung handelt. Derartige bekannte tatsächliche Sachverhalte können beispielsweise historische Daten vorheriger vergleichbarer Zeiträume oder - insbesondere für die elektrische Energie - eine Wettervorhersage sein. Es kann sich aber auch um einen tatsächlich bekannten Preis handeln, so dass der Preis also nicht nur erwartet wird, sondern auch tatsächlich gegeben ist.

Die Anlagenbetriebsweise für die DRI-Anlage ist etwas anderes als der Produktionsplan. Insbesondere definiert die Anlagenbetriebsweise für jeden Zeitpunkt, wie die DRI-Anlage betrieben (= gesteuert) wird. Die Anlagenbetriebsweise ist also in zeitlicher Hinsicht kontinuierlich ("um 17:52:43 Uhr wird die DRI-Anlage im Ansteuerungszustand A betrieben, um 17:52:44 Uhr im Ansteuerungszustand B, um 17:52:45 Uhr im Ansteuerungszustand C" usw.). Die Anlagenbetriebsweise muss natürlich derart festgelegt sein, dass die Vorgaben des Produktionsplans erfüllt werden.

Die Elektrolysenbetriebsweise für die Elektrolyseanlage definiert für jeden Zeitpunkt, wie die Elektrolyseanlage betrieben (= gesteuert) wird. Die Elektrolysenbetriebsweise ist also - analog zur Anlagenbetriebsweise - in zeitlicher Hinsicht kontinuierlich. Die Elektrolysenbetriebsweise legt fest, in welchem Ausmaß von der Elektrolyseanlage Strom benötigt und mittels der Elektrolyseanlage Wasserstoff produziert wird.

Die DRI-Anlage verbraucht Wasserstoff und/oder Erdgas und/oder Ammoniak. Die Elektrolyseanlage produziert Wasserstoff. Wenn außer der DRI-Anlage und der Elektrolyseanlage keine weiteren Erzeuger und Verbraucher für Wasserstoff vorhanden sind, ist die Wasserstoffspeicherbetriebsweise für den Wasserstoffspeicher eine abhängige Betriebsweise, da sie schlichtweg die Differenz zwischen dem von der DRI-Anlage benötigten Wasserstoff und dem von der Elektrolyseanlage produzierten Wasserstoff aufnehmen oder abgeben muss. Es muss bei der Bestimmung der Anlagenbetriebsweise und der Elektrolysenbetriebsweise lediglich beachtet werden, dass der Wasserstoffspeicher nicht vollständig leer wird, nur eine begrenzte Kapazität aufweist und pro Zeiteinheit nur gewisse Mengen an Wasserstoff in den Wasserstoffspeicher eingespeichert oder aus ihm entnommen werden können.

Die Versorgungsbetriebsweise für die Versorgungseinrichtung definiert in analoger Weise für jeden Zeitpunkt, wie die Versorgungseinrichtung betrieben (= gesteuert) wird.

Die erwarteten finalen Zustände für das Ende des Prognosehorizonts ermittelt die Steuereinrichtung ausgehend von den jeweiligen aktuellen Zuständen durch Fortschreibung entsprechend der jeweiligen Betriebsweise.

Das Variieren der angesetzten Betriebsweisen mit dem Ziel der Minimierung der Kostenfunktion ist ein typisches Optimierungsproblem. Optimierungsprobleme als solche, die Art und Weise, auf welche Optimierungsprobleme angesetzt werden, und die Art und Weise, auf welche Optimierungsprobleme gelöst werden, ist Fachleuten bekannt. Rein beispielhaft kann auf

- Fletcher, R.: Practical Methods on Optimization. 2nd ed., John Wiley Inc., Cichester, New York 1987,
- Hintermüller, M.; Stadler, G.: A semi-smooth Newton methods for linear-quadratic control problems, Zeitschrift für angewandte Mathematik und Mechanik (ZAMM) 83-4, 219 - 237, (2003) oder
- Ito, K.; Kunisch, K.: Semi-smooth Newton methods for state-constrained optimal control problems, Systems and Control Letters, 50, 221 - 228, (2003)

verwiesen werden. Aus den genannten Fundstellen ist auch bekannt, auf welche Art und Weise einzuhaltende Randbedingungen formuliert werden können, beispielsweise Leistungsgrenzen der DRI-Anlage. Aus den genannten Fundstellen sind auch weitere Sachverhalte bekannt, die bei der Formulierung von Optimierungsproblemen relevant sind. Ein Beispiel derartiger Sachverhalte ist die Art und Weise, auf welche Abweichungen von bevorzugten Betriebszuständen "bestraft" werden können. Ein weiteres Beispiel ist die Art und Weise, auf welche einzuhaltende Bedingungen (durch Gleichheitsnebenbedingungen) formuliert werden können. Durch einzuhaltende Bedingungen kann beispielsweise erzwungen werden, welchen Zustand Teilsysteme des Gesamtsystems am Ende des Prognosehorizonts aufweisen. Ein derartiger Zustand kann im Falle des Wasserstoffspeichers beispielsweise dessen gespeicherte Menge an Wasserstoff sein.

Der Begriff "Kostenfunktion" hat für den Fachmann auf dem Gebiet von Optimierungsproblemen eine fest umrissene Bedeutung. Sie kann zwar im Sinne einer wirtschaftlichen Bewertung gemeint sein. Dies ist aber nicht notwendigerweise der Fall. Vorliegend können in die Kostenfunktion verschiedene Größen eingehen.

Beispielsweise können in die Kostenfunktion die Kosten für den Bezug elektrischer Energie aus dem Versorgungsnetz eingehen. Die Kosten für den Bezug elektrischer Energie sind selbsterklärend. Es wird lediglich darauf hingewiesen, dass die Kosten im Einzelfall negativ sein können, nämlich dann, wenn der Bezugspreis für elektrische Energie beispielsweise aufgrund eines temporären Überangebots zeitweise negativ wird.

Alternativ oder zusätzlich können in die Kostenfunktion Bewertungen der erwarteten finalen Zustände eingehen. Die Bewertung des erwarteten finalen Anlagenzustands kann durch Verschleiß bedingte Kosten der DRI-Anlage umfassen. Weiterhin kann die Bewertung des erwarteten finalen Anlagenzustands einen Anteil umfassen, der beispielsweise unter Verwertung eines energetischen Zustands oder eines Phasenzustands von in der DRI-Anlage befindlichen Produkten ermittelt wird. Eine ähnliche Bewertung ist für die Elektrolyseanlage möglich. Bezüglich des Wasserstoffspeichers und der Versorgungseinrichtung kann in die Bewertung insbesondere ein Verschleiß eingehen. Weiterhin kann die Bewertung des erwarteten finalen Wasserstoffspeicherzustands einen Anteil umfassen, der unter Verwertung einer durch die Wasserstoffspeicherbetriebsweise bewirkten Degradation des Wasserstoffspeichers ermittelt wird, also einer Verschlechterung der Leistungsfähigkeit des Wasserstoffspeichers. Gleiches gilt für etwaige Speicher der Versorgungseinrichtung.

Alternativ oder zusätzlich kann in die Kostenfunktion eine Produktivität der DRI-Anlage eingehen.

Vorzugsweise umfasst das Gesamtsystem als weiteres Teilsystem einen elektrischen Energiespeicher, der zur Übertragung elektrischer Energie direkt oder indirekt mit der DRI-Anlage, der Elektrolyseanlage und dem elektrischen Versorgungsnetz verbunden ist. In diesem Fall ist der Steuereinrichtung als weiterer aktueller Zustand ein aktueller Speicherzustand des elektrischen Energiespeichers bekannt und umfassen die von der Steuereinrichtung angesetzten und variierten Betriebsweisen zusätzlich eine Speicherbetriebsweise für den elektrischen Energiespeicher. Auch umfassen die erwarteten finalen Zustände zusätzlich einen unter Verwertung des aktuellen Speicherzustands und der angesetzten Speicherbetriebsweise ermittelten finalen Speicherzustand. Schließlich variiert die Steuereinrichtung auch die Speicherbetriebsweise und hierauf aufbauend den erwarteten finalen Speicherzustand.

Das Vorsehen eines elektrischen Energiespeichers und dessen Einbindung in die Optimierung verbessern in erheblichem Umfang die Flexibilität, mit welcher der Bezug an elektrischer Energie aus dem Versorgungsnetz gesteuert werden kann. Denn entscheidend für die effiziente Verwendung des elektrischen Energiespeichers und des Wasserstoffspeichers im Rahmen der vorliegenden Erfindung sind zum einen der - erwartete - zukünftige elektrische Energiebedarf der DRI-Anlage und zum anderen der- erwartete - zukünftige Preis für aus dem Versorgungsnetz bezogene elektrische Energie.

Der Energiespeicherzustand beschreibt - ähnlich zu den anderen Zuständen - in dem erforderlichen Ausmaß den Zustand des elektrischen Energiespeichers. Der Energiespeicherzustand kann beispielsweise umfassen, in welchem Umfang (prozentual und/oder absolut) der Energiespeicher geladen ist und welche Temperatur Speicherzellen des Energiespeichers aufweisen. Weiterhin kann der Energiespeicherzustand auch umfassen, in welchem Verschleißzustand sich der Energiespeicher oder Teile des Energiespeichers befinden. Der Energiespeicherzustand kann weiterhin prinzipiell maximal mögliche und momentan maximal mögliche Betriebsgrößen umfassen, beispielsweise Lade- und Entladeströme.

Die Energiespeicherbetriebsweise für den elektrischen Energiespeicher legt fest, in welchem Ausmaß der elektrische Energiespeicher jeweils geladen und entladen werden soll. Die Energiespeicherbetriebsweise ist analog zur Anlagenbetriebsweise kontinuierlich. Eine aus dem elektrischen Energiespeicher entnommene elektrische Energie kann - natürlich nur temporärgegebenenfalls sogar so groß sein, dass sie den Energiebedarf der DRI-Anlage und der Elektrolyseanlage übersteigt, so dass im Ergebnis elektrische Energie in das Versorgungsnetz eingespeist wird.

Der erwartete Preis für aus dem Versorgungsnetz bezogene elektrische Energie kann für verschiedene Zeiträume auf jeweils individuell verschiedene Art und Weise festgelegt werden. An einem Spotmarkt steht der Preis oftmals nur für einen relativ begrenzten Zeitraum fest, beispielsweise nur 24 Stunden im Voraus. Hier werden bestimmte Energiemengen für feste Zeiträume zu einem jeweiligen Spotmarktpreis gehandelt. Es gibt jedoch auch Verträge mit längerfristigen Bindungen, beispielsweise einen festen Preis für ein bestimmtes Leistungsniveau auf ein Jahr im Voraus. Die beiden Beispiele sind natürlich nicht die einzig möglichen.

Oftmals weicht jedoch die Abrechnung des tatsächlichen Leistungsbezugs aus dem Versorgungsnetz von einem zuvor vereinbarten Tarif ab, nämlich dann, wenn eine andere als die zuvor gekaufte Leistungsmenge bezogen wird. So wird beispielsweise der Energiebezug vom Spotmarkt zwar stundenweise gekauft, die Abrechnung erfolgt jedoch viertelstundenweise. Wird die zuvor gekaufte Energiemenge bezogen, wird auch der vereinbarte Tarif abgerechnet. Wird hingegen mehr oder weniger Energie bezogen, als zuvor am Spotmarkt gekauft wurde, hängt der tatsächliche Preis für aus dem Versorgungsnetz bezogene elektrische Energie von einer Vielzahl von Faktoren ab. In den tatsächlichen Preis geht insbesondere ein, ob und gegebenenfalls mit welchem Aufwand zusätzlich bezogene elektrische Energie vom Betreiber des Versorgungsnetzes beschafft werden musste oder ob und gegebenenfalls mit welchem Aufwand von dem Betreiber des Versorgungsnetzes gekaufte, aber nicht bezogene elektrische Energie anderweitig verwertet werden konnte.

Um eine zuverlässige Ermittlung der Kosten vornehmen zu können, ist daher vorzugsweise der Prognosehorizont in eine Anzahl von zeitlich frühen Zeitabschnitten und eine Anzahl von zeitlich späten Zeitabschnitten unterteilt. Die Anzahl an frühen und die Anzahl an späten Zeitabschnitten können nach Bedarf bestimmt sein. Wenn - beispielsweise - 24 Stunden vorher gekauft wird und viertelstundenweise abgerechnet wird, ist die Zeitdauer eines einzelnen Zeitabschnitts 15 Minuten, wobei der Prognosehorizont 96 frühe und 4 späte Zeitabschnitte aufweist.

Für die zeitlich frühen Zeitabschnitte ermittelt die Steuereinrichtung die Speicherbetriebsweise derart, dass das Gesamtsystem während der zeitlich frühen Zeitabschnitte eine für den jeweiligen zeitlich frühen Zeitabschnitt vorbestimmte Menge an elektrischer Energie aus dem elektrischen Versorgungsnetz bezieht. Dadurch wird für die zeitlich frühen Zeitabschnitte eine vorab durchgeführte zuverlässige Ermittlung der Kosten für den Bezug an elektrischer Energie möglich. Weiterhin variiert die Steuereinrichtung zumindest für die zeitlich späten Zeitabschnitte auch die Speicherbetriebsweise und hierauf aufbauend den erwarteten finalen Speicherzustand.

Ihre vollen Vorteile zeigt die soeben erläuterte Vorgehensweise in dem Fall, dass die Steuereinrichtung für die zeitlich späten Zeitabschnitte Mengen an elektrischer Energie festlegt, die während der zeitlich letzten Abschnitte jeweils aus dem elektrischen Versorgungsnetz bezogen werden sollen. Denn dadurch wird auch für die späten Zeitabschnitte erreicht, dass der beispielsweise an einem Spotmarkt gekaufte Energiebezug - weder mehr noch weniger - tatsächlich benötigt und abgenommen wird.

Die Festlegung kann beispielsweise basierend auf den Betriebsweisen der weiteren Teilsysteme (also ohne den elektrischen Energiespeicher) während der zeitlich späten Zeitabschnitte, einem Soll-Speicherzustand des elektrischen Energiespeichers und einer Abweichung eines erwarteten Speicherzustands zum Zeitpunkt des Übergangs von den zeitlich frühen Zeitabschnitten zu den zeitlich späten Zeitabschnitten vorgenommen werden. In die Festlegung kann insbesondere auch der Preis für die elektrische Energie eingehen, unter Umständen sogar zusätzlich auch der Preis für den fossilen Energieträger. Gegebenenfalls kann die Steuereinrichtung auch aktiv in die Preisgestaltung eingreifen, vergleiche die am selben Tag wie die vorliegende Anmeldung eingereichte Patentanmeldung der Anmelderin mit dem Titel "Kosteneffizienter Betrieb einer Anlage der Stahlindustrie und weiterer Teilsysteme eines Gesamtsystems".

Vorzugsweise berücksichtigt die Steuereinrichtung beim Variieren der Betriebsweise einen minimalen und einen maximalen Ladezustand des elektrischen Energiespeichers und/oder einen mittleren Ladezustand des elektrischen Energiespeichers. Durch die Berücksichtigung derartiger Größen - sei es als zu beachtende Randbedingungen, sei es durch direktes Eingehen in die Kostenfunktion - kann erreicht werden, dass der elektrische Energiespeicher jederzeit und in beide Richtungen - sowohl zum Aufnehmen von elektrischer Energie als auch zum Abgeben von elektrischer Energie - eine gewisse Kapazität aufweist, so dass auf Störungen beim Betrieb der DRI-Anlage und/oder der Elektrolyseanlage - gegebenenfalls auch bei Störungen des Versorgungsnetzes oder anderen Einrichtungen - durch eine geänderte Betriebsweise des elektrischen Energiespeichers reagiert werden kann.

In manchen Fällen weist das Gesamtsystem als weiteres Teilsystem eine Stromerzeugungseinrichtung auf, mittels derer auf regenerative Art und Weise elektrische Energie erzeugbar ist. In diesem Fall ist die Stromerzeugungseinrichtung zur Übertragung elektrischer Energie direkt oder indirekt mit der DRI-Anlage, der Elektrolyseanlage und dem elektrischen Versorgungsnetz verbunden, in der Regel auch mit dem elektrischen Energiespeicher. Die Stromerzeugungseinrichtung kann insbesondere als Windkraftanlage oder als Photovoltaikanlage ausgebildet sein. Das Betriebsverfahren ist bei vorhandener Stromerzeugungseinrichtung dadurch ausgestaltet,

- dass der Steuereinrichtung für den Prognosehorizont zusätzlich eine mittels der Stromerzeugungseinrichtung erzeugbare erwartete elektrische Energie bekannt ist und
- dass die Steuereinrichtung beim Variieren der Betriebsweisen die mittels der Stromerzeugungseinrichtung erzeugbare erwartete elektrische Energie berücksichtigt.

Dadurch ist eine noch weitergehende Optimierung des Betriebs des Gesamtsystems möglich.

Bei längerer Speicherung von Wasserstoff treten nicht vernachlässigbare Verluste auf. Die Verlustrate liegt - je nach Art der Speicherung - bei mindestens 0,1 % der gespeicherten Menge an Wasserstoff pro Tag und kann bis zu 0,5 % pro Tag betragen. Aus diesem Grund sollten in die Kostenfunktion vorzugsweise auch Verluste an im Wasserstoffspeicher befindlichem Wasserstoff eingehen.

Vorzugsweise berücksichtigt die Steuereinrichtung beim Variieren der Betriebsweisen einen minimalen und einen maximalen Füllstand des Wasserstoffspeichers und/oder einen mittleren Füllstand des Wasserstoffspeichers. Durch die Berücksichtigung derartiger Größen - sei es als zu beachtende Randbedingungen, sei es durch direktes Eingehen in die Kostenfunktion - kann erreicht werden, dass der Wasserstoffspeicher jederzeit und in beide Richtungen - sowohl zum Aufnehmen von Wasserstoff als auch zum Abgeben von Wasserstoff - eine gewisse Kapazität aufweist, so dass auf Störungen beim Betrieb der DRI-Anlage und/oder der Elektrolyseanlage - gegebenenfalls auch bei Störungen des Versorgungsnetzes oder anderen Einrichtungen - durch eine geänderte Betriebsweise des Wasserstoffspeichers reagiert werden kann.

Es kann von Vorteil sein, wenn die Versorgungseinrichtung eine Erzeugungseinrichtung zum Erzeugen von Ammoniak mit oder ohne zugeordneten Speicher für Ammoniak umfasst. In diesem Fall ist die Erzeugungseinrichtung zur Übertragung elektrischer Energie direkt oder indirekt mit der DRI-Anlage, der Elektrolyseanlage und dem elektrischen Versorgungsnetz verbunden. Weiterhin umfasst in diesem Fall der aktuelle Versorgungszustand einen aktuellen Betriebszustand der Erzeugungseinrichtung, umfasst die Versorgungsbetriebsweise die Betriebsweise der Erzeugungseinrichtung und umfasst der finale erwartete Versorgungszustand einen erwarteten finalen Betriebszustand der Erzeugungseinrichtung, wobei der finale erwartete Betriebszustand der Erzeugungseinrichtung von der Steuereinrichtung durch Fortschreibung des aktuellen Betriebszustands entsprechend der Betriebsweise der Erzeugungseinrichtung ermittelt wird. Somit umfasst das Variieren der Versorgungsbetriebsweise auch ein Variieren der Betriebsweise der Erzeugungseinrichtung.

Die Aufgabe wird weiterhin durch ein Steuerprogramm mit den Merkmalen des Anspruchs 10 gelöst. Erfindungsgemäß umfasst das gesteuerte Gesamtsystem - zusätzlich zu den obenstehend genannten Teilsystemen - als (weiteres) Teilsystem eine Versorgungseinrichtung. Die DRI-Anlage und die Versorgungseinrichtung sind zum Zuführen von Erdgas und/oder Ammoniak zur DRI-Anlage miteinander verbunden. Weiterhin bewirkt die Abarbeitung des Maschinencodes durch die Steuereinrichtung, dass die Steuereinrichtung das Gesamtsystem gemäß einem erfindungsgemäßen Betriebsverfahren steuert.

Die Aufgabe wird weiterhin durch eine Steuereinrichtung mit den Merkmalen des Anspruchs 11 gelöst. Erfindungsgemäß umfasst das gesteuerte Gesamtsystem - zusätzlich zu den obenstehend genannten Teilsystemen - als (weiteres) Teilsystem eine Versorgungseinrichtung. Die DRI-Anlage und die Versorgungseinrichtung sind zum Zuführen von Erdgas und/oder Ammoniak zur DRI-Anlage miteinander verbunden. Weiterhin ist die Steuereinrichtung mit einem erfindungsgemäßen Steuerprogramm programmiert, so dass die Steuereinrichtung bei Abarbeitung des Maschinencodes des Steuerprogramms das Gesamtsystem gemäß einem erfindungsgemäßen Betriebsverfahren steuert.

Die Aufgabe wird weiterhin durch ein Gesamtsystem mit den Merkmalen des Anspruchs 12 gelöst. Erfindungsgemäß ist vorgesehen,

- dass das gesteuerte Gesamtsystem - zusätzlich zu den obenstehend genannten Teilsystemen - als (weiteres) Teilsystem eine Versorgungseinrichtung umfasst,

- dass die DRI-Anlage und die Versorgungseinrichtung zum Zuführen von Erdgas und/oder Ammoniak zur DRI-Anlage miteinander verbunden sind und
- dass die Steuereinrichtung als erfindungsgemäße Steuereinrichtung ausgebildet ist, die bei Abarbeitung des Maschinencodes des Steuerprogramms das Gesamtsystem gemäß einem erfindungsgemäßen Betriebsverfahren steuert.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1    ein Gesamtsystem,
FIG 2    ein Ablaufdiagramm,
FIG 3    ein weiteres Gesamtsystem
FIG 4    ein Ablaufdiagramm,
FIG 5    einen Zeitstrahl,
FIG 6    ein Ablaufdiagramm und
FIG 7    ein Ablaufdiagramm.

Beschreibung der Ausführungsformen

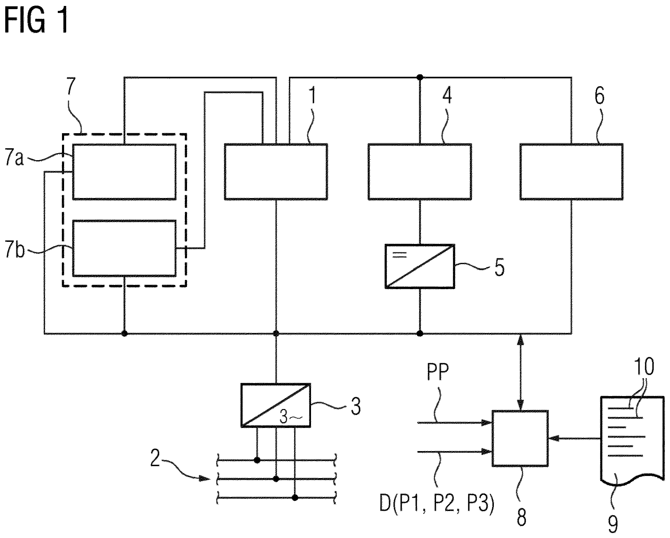

Gemäß FIG 1 umfasst ein Gesamtsystem als Teilsystem eine DRI-Anlage 1 (DRI = direct reduction of iron). In der DRI-Anlage 1 wird aus Eisenerz Eisenschwamm hergestellt. Die DRI-Anlage 1 benötigt entsprechend der Produktion permanent eine Zufuhr von Wasserstoff, Erdgas und/oder Ammoniak sowie von elektrischer Energie.
Die elektrische Energie kann die DRI-Anlage 1 aus einem elektrischen Versorgungsnetz 2 beziehen, mit dem die DRI-Anlage 1 direkt (nicht dargestellt) oder indirekt (beispielsweise über einen Umrichter 3) verbunden ist. Das Versorgungsnetz 2 ist üblicherweise ein Drehstromnetz und damit ein mehrphasiges Versorgungsnetz. Das Drehstromnetz wird oftmals mit einer Mittelspannung im Bereich von 20 kV bis 30 kV oder mit einer Hochspannung von 110 kV betrieben.
Das Gesamtsystem umfasst als weiteres Teilsystem eine Elektrolyseanlage 4. Auch die Elektrolyseanlage 4 verbraucht in ihrem Betrieb elektrische Energie. Die Elektrolyseanlage 4 ist daher ebenfalls mit dem Versorgungsnetz 2 verbunden. Die Elektrolyseanlage 4 benötigt für ihren Betrieb eine Gleichspannung. Der Elektrolyseanlage 4 ist daher üblicherweise ein Gleichrichter 5 vorgeordnet, so dass nur eine indirekte Verbindung mit dem Versorgungsnetz 2 besteht. Die DRI-Anlage 1 und die Elektrolyseanlage 4 sind zum Transfer von Wasserstoff direkt oder indirekt miteinander verbunden. Etwaige Pumpen, Ventile und dergleichen sind in FIG 1 nicht mit dargestellt.
Das Gesamtsystem umfasst als weiteres Teilsystem einen Wasserstoffspeicher 6. Der Wasserstoffspeicher 6 kann als Speicher im engeren Sinne ausgebildet sein, also als dedizierter Wasserstoffspeicher. Auch das Leitungsnetz, über das Wasserstoff transportiert wird, weist jedoch eine gewisse Speicherkapazität auf und kann als Wasserstoffspeicher 6 im Sinne der vorliegenden Erfindung dienen. Im Falle eines eigenen, dedizierten Speichers kann der Speicher alternativ überirdisch oder unterirdisch angeordnet sein. Der Wasserstoffspeicher 6 ist zum Aufnehmen von Wasserstoff direkt oder indirekt mit der Elektrolyseanlage 4 verbunden und zum Abgeben von Wasserstoff direkt oder indirekt mit der DRI-Anlage 1 verbunden. Aufgrund des Wasserstoffspeichers 6 sind der Betrieb der DRI-Anlage 1 und der Elektrolyseanlage 4 flexibler gestaltbar.
Es ist möglich, dass der von der Elektrolyseanlage 4 erzeugte Wasserstoff stets dem Wasserstoffspeicher 6 zugeführt wird und der von der DRI-Anlage 1 benötigte Wasserstoff stets von dem Wasserstoffspeicher 6 geliefert wird, so dass der Wasserstoffspeicher 6 sozusagen als Umschlagstation für den Wasserstoff dient. Es ist aber auch eine direkte Verbindung der DRI-Anlage 1 und der Elektrolyseanlage 4 möglich.
Das Gesamtsystem umfasst als weiteres Teilsystem eine Versorgungseinrichtung 7. Die DRI-Anlage 1 und die Versorgungseinrichtung 7 sind zum Zuführen von Erdgas und/oder Ammoniak zur DRI-Anlage 1 miteinander verbunden.
FIG 1 zeigt eine einfache Ausgestaltung der Versorgungseinrichtung 7, bei der zur Speicherung von Erdgas und Ammoniak jeweils eine Speichereinrichtung 7a, 7b vorhanden sind. Es sind aber auch alternative Ausgestaltungen möglich. Beispielsweise kann die Versorgungseinrichtung 7 einen Anschluss an ein Versorgungsnetz für Erdgas aufweisen. In diesem Fall kann - nicht aber muss - die Speichereinrichtung 7a entfallen. Ebenso kann die Versorgungseinrichtung 7 eine Erzeugungseinrichtung zum Erzeugen von Ammoniak aufweisen. In diesem Fall kann - nicht aber muss - die Speichereinrichtung 7b entfallen. Weiterhin zeigt FIG 1 eine Ausgestaltung der Versorgungseinrichtung 7, die der DRI-Anlage 1 sowohl Erdgas als auch Ammoniak zuführen kann. Es ist jedoch ebenfalls möglich, dass die Versorgungseinrichtung 7 der DRI-Anlage 1 nur entweder Erdgas oder Ammoniak zuführen kann.

Wenn die Erzeugungseinrichtung zum Erzeugen von Ammoniak umfasst, ist in aller Regel auch die Erzeugungseinrichtung zur Übertragung elektrischer Energie direkt oder indirekt mit der DRI-Anlage 1, der Elektrolyseanlage 4 und dem elektrischen Versorgungsnetz 2 verbunden. Es ist möglich, dass diese Erzeugungseinrichtung zur Herstellung des Ammoniaks aus Stickstoff und Wasserstoff mit der Elektrolyseanlage 4 und/oder dem Wasserstoffspeicher 6 verbunden ist.

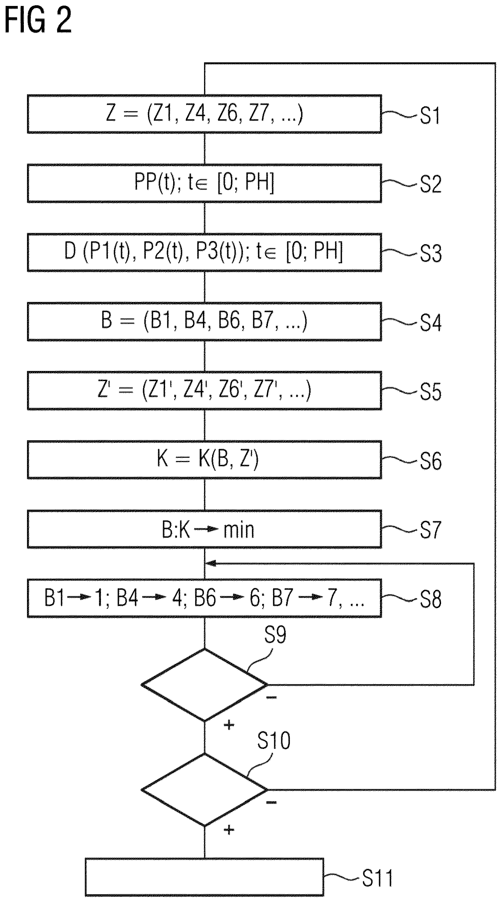

Das Gesamtsystem umfasst weiterhin eine Steuereinrichtung 8. Die Steuereinrichtung 8 ist mit einem Steuerprogramm 9 programmiert. Das Steuerprogramm 9 umfasst Maschinencode 10, der von der Steuereinrichtung 8 abarbeitbar ist. Aufgrund der Programmierung mit dem Steuerprogramm 9 arbeitet die Steuereinrichtung 8 den Maschinencode 10 ab. Die Abarbeitung des Maschinencodes 10 durch die Steuereinrichtung 8 bewirkt, dass die Steuereinrichtung 8 das Gesamtsystem gemäß einem Betriebsverfahren steuert, das nachstehend in Verbindung mit FIG 2 näher erläutert wird. Noch bevor das erfindungsgemäße Betriebsverfahren erläutert wird, wird jedoch darauf hingewiesen, dass die Steuereinrichtung 8 nachstehend zwar als einheitliche Steuereinrichtung 8 erläutert wird, die die Teilsysteme 1, 4, 6 und 7 des Gesamtsystems gemeinsam steuert. Die Steuereinrichtung 8 kann jedoch ebenso für die Steuerung der Teilsysteme 1, 4, 6 und 7 jeweils eine eigene Teil-Steuereinrichtung aufweisen. In diesem Fall müssen zwischen den Teil-Steuereinrichtungen ein entsprechender Informationsaustausch und eine entsprechende Abstimmung bzw. Koordination erfolgen.

Gemäß FIG 2 wird der Steuereinrichtung 8 in einem Schritt S1 ein aktueller Zustand Z des Gesamtsystems bekannt. Der aktuelle Zustand Z umfasst für die Teilsysteme 1, 4, 6 und 7 jeweils einen aktuellen Teilzustand $Z1$, $Z4$, $Z6$, $Z7$. Die Ziffer des jeweiligen aktuellen Teilzustands $Z1$, $Z4$, $Z6$, $Z7$ stimmt mit dem Bezugszeichen des jeweiligen Teilsystems 1, 4, 6 und 7 überein.

Beispielsweise kann der Teilzustand $Z1$ den Produktionsfortschritt der DRI-Anlage 1 umfassen. Der Teilzustand $Z1$ kann weiterhin umfassen, welche Materialien sich in welchem Zustand momentan in der DRI-Anlage 1 befinden.

Der Teilzustand $Z4$ kann beispielsweise eine Temperatur und eine chemische Zusammensetzung der Elektrolyseflüssigkeit der Elektrolyseanlage 4 und einen Verschleißzustand der Elektrolyseanlage 4 umfassen.

Der Teilzustand $Z6$ umfasst zumindest den Füllstand des Wasserstoffspeichers 6, also das Ausmaß, zu dem der Wasserstoffspeichers 6 gefüllt ist. Der Teilzustand $Z6$ kann auch weitere Größen umfassen, beispielsweise eine Temperatur und/oder einen Gasdruck des Wasserstoffspeichers 6 oder einen maximal möglichen oder zulässigen Fluss an Wasserstoffstrom beim Füllen und Entleeren des Wasserstoffspeichers 6.

Ähnliche Ausführungen können für den Teilzustand $Z7$ der Versorgungseinrichtung 7 gelten. Falls die Versorgungseinrichtung 7 die Erzeugungseinrichtung zum Erzeugen von Ammoniak umfasst, umfasst der aktuelle Versorgungszustand $Z7$ auch einen aktuellen Betriebszustand der Erzeugungseinrichtung.

In einem Schritt S2 wird der Steuereinrichtung 8 ein gewünschter Produktionsplan PP der DRI-Anlage 1 bekannt. Beispielsweise kann der Produktionsplan PP der Steuereinrichtung 8 von einer Bedienperson (nicht dargestellt) vorgegeben werden. Der Produktionsplan PP legt fest, welche Endprodukte mittels der DRI-Anlage 1 aus welchen Ausgangsmaterialien erzeugt werden sollen und welche Eigenschaften die Endprodukte aufweisen sollen. In der Regel legt der Produktionsplan PP auch fest, welche Zwischenprodukte erzeugt werden sollen und bis wann ein bestimmtes Produkt produziert werden soll. Der Produktionsplan PP erstreckt sich über einen Prognosehorizont PH. Der Prognosehorizont PH liegt in aller Regel mindestens bei mehreren Stunden, oftmals sogar im Bereich von mehreren Tagen.

Beispielsweise kann der Produktionsplan PP eine Menge an Roheisen umfassen, die pro Stunde oder pro Tag mittels der DRI-Anlage 1 produziert werden soll. Der Produktionsplan PP kann auch festlegen, welche Menge an Kohlenstoff in dem erzeugten Roheisen bzw. Eisenschwamm mindestens enthalten sein soll und/oder welche Menge an Stickstoff in dem erzeugten Roheisen bzw. Eisenschwamm höchstens enthalten sein soll

In einem Schritt S3 werden der Steuereinrichtung 8 Daten D bekannt. Durch die Daten D ist für den Prognosehorizont PH ein zumindest erwarteter Preis $P1$ für elektrische Energie bestimmt, soweit die elektrische Energie aus dem Versorgungsnetz 2 bezogen wird. Durch die Daten D sind weiterhin zumindest erwartete Preise $P2$, $P3$ für das Erdgas und/oder den Ammoniak bestimmt. Die Preise $P1$ bis $P3$ sind zumindest als Funktion der Zeit $t$ definiert. Sie können auch von weiteren Umständen abhängig sein.

Gegebenenfalls können der Produktionsplan PP und die Daten D für die Preise $P1$ bis $P3$ der Steuereinrichtung 8 in den Schritten S2 und S3 zunächst für unterschiedliche Zeithorizonte bekannt werden. In diesem Fall ist der Prognosehorizont PH durch den kleinsten der Zeithorizonte bestimmt.

In einem Schritt S4 setzt die Steuereinrichtung 8 für den Prognosehorizont PH eine Betriebsweise B für das Gesamtsystem an. Die Betriebsweise B umfasst - analog zum aktuellen Zustand Z - für die Teilsysteme 1, 4, 6 und 7 jeweils eine Teilbetriebsweise $B1$, $B4$, $B6$, $B7$. Die Teilbetriebsweisen $B1$, $B4$, $B6$, $B7$ definieren für jeden Zeitpunkt, wie das jeweilige Teilsystem 1, 4, 6, 7 betrieben (= gesteuert) wird. Die Teilbetriebsweisen $B1$, $B4$, $B6$, $B7$ können sekundengenau zeitaufgelöst sein. Die angesetzten Betriebsweisen B, $B1$, $B4$, $B6$, $B7$ sind zunächst nur vorläufig.

Die Teilbetriebsweise $B1$ für die DRI-Anlage 1 - nachfolgend auch als Anlagenbetriebsweise $B1$ bezeichnet - wird von der Steuereinrichtung 8 derart festgelegt, dass die Vorgaben des Produktionsplans PP erfüllt werden. Insbesondere kann die Anlagenbetriebsweise B1 die Mengen an Materialien und Energie, die der DRI-Anlage 1 zugeführt werden, beispielsweise die Menge an Eisenerz, die Menge an Wasserstoff, die Menge an Erdgas, die Menge an Ammoniak und die Menge an elektrischem Strom.

Die Teilbetriebsweise B4 für die Elektrolyseanlage 4 - nachfolgend auch als Elektrolysenbetriebsweise B4 bezeichnet - kann von der Steuereinrichtung 8 oftmals eigenständig und relativ flexibel festgelegt werden. Die Steuereinrichtung 8 muss lediglich beachten, dass der Bedarf der DRI-Anlage 1 an Wasserstoff gedeckt wird, der Füllgrad des Wasserstoffspeichers 6 nicht unter 0 % fällt und nicht über 100 % steigt und im übrigen die Auslegungsgrenzen der Elektrolyseanlage 4 beachtet werden. Alternativ zu einem nahezu freien Ansatz für die Elektrolysenbetriebsweise B4 ist es auch möglich, auch für die Elektrolyseanlage 4 einen Produktionsplan vorzugeben, der bei der Ermittlung der Elektrolysenbetriebsweise B4 berücksichtigt werden muss. Je nach Lage des Einzelfalls kann ein mehr oder minder gleichmäßiger Betrieb der Elektrolyseanlage 4 sinnvoll sein. Es kann aber auch sinnvoll sein, den Betrieb der Elektrolyseanlage 4 zeitlich zu variieren, insbesondere dann, wenn die Kosten für die elektrische Energie stark schwanken.

Die Teilbetriebsweise B6 für den Wasserstoffspeicher 6 - nachfolgend auch als Wasserstoffspeicherbetriebsweise B6 bezeichnet - kann von der Steuereinrichtung 8 meist nicht mehr frei festgelegt werden. Vielmehr ist sie durch die Anlagenbetriebsweise B1 (und damit den Verbrauch an Wasserstoff) und die Elektrolysenbetriebsweise B4 (und damit die Erzeugung von Wasserstoff) festgelegt. Der Wasserstoffspeicher 6 ermöglicht jedoch zumindest in gewissem Umfang die Entkopplung des Betriebs der DRI-Anlage 1 und der Elektrolyseanlage 4 voneinander und damit den flexiblen Betrieb der Elektrolyseanlage 4.

Die Teilbetriebsweise B7 für die Versorgungseinrichtung 7 - nachfolgend auch als Versorgungsbetriebsweise B7 bezeichnet - umfasst gegebenenfalls auch die Betriebsweise der Erzeugungseinrichtung.

In einem Schritt S5 ermittelt die Steuereinrichtung für das Ende des Prognosehorizonts PH einen erwarteten finalen Gesamtzustand Z'. Der erwartete finale Gesamtzustand Z' umfasst - analog zum aktuellen Zustand Z - für die Teilsysteme 1, 4, 6 und 7 jeweils einen erwarteten finalen Teilzustand Z1', Z4', Z6', Z7'. Die Ermittlung des jeweiligen erwarteten finalen Teilzustands Z1', Z4', Z6', Z7' erfolgt unter Verwertung des jeweiligen aktuellen Teilzustands Z1, Z4, Z6, Z7 und der jeweiligen Teilbetriebsweise B1, B4, B6, B7. Konkret ermittelt die Steuereinrichtung 8 den jeweiligen erwarteten finalen Teilzustand Z1', Z4', Z6', Z7' durch Fortschreibung des jeweiligen aktuellen Teilzustands Z1, Z4, Z6, Z7 anhand der jeweiligen Teilbetriebsweise B1, B4, B6, B7. der erwartete finale Teilzustand Z7' umfasst gegebenenfalls auch einen erwarteten finalen Betriebszustand der Erzeugungseinrichtung. Der erwartete finale Betriebszustand wird gegebenenfalls von der Steuereinrichtung 8 durch Fortschreibung des aktuellen Betriebszustands entsprechend der Betriebsweise der Erzeugungseinrichtung ermittelt.

In einem Schritt S6 ermittelt die Steuereinrichtung 8 den Wert einer Kostenfunktion K. In die Kostenfunktion K können verschiedene Kostenfaktoren eingehen. Die Kostenfunktion K ist als gewichtete oder ungewichtete Summe der einzelnen Kostenfaktoren definiert. Als Kostenfaktoren kommen beispielsweise die Kosten für den Bezug elektrischer Energie aus dem Versorgungsnetz 2 und für den Verbrauch an Erdgas und/oder Ammoniak in Frage. Alternativ oder zusätzlich kommen auch die Betriebsweisen B1, B4, B6, B7 der Teilsysteme 1, 4, 6, 7 in Frage. Alternativ oder zusätzlich kommen auch Bewertungen der erwarteten finalen Zustände Z1', Z4', Z6', Z7' in Frage. Schließlich kommt auch eine Produktivität der DRI-Anlage 1 in Frage. Die Produktivität der DRI-Anlage 1 kann zusätzlich zur Menge an produziertem Roheisen bzw. Eisenschwamm auch durch Qualitätsmerkmale des produzierten Roheisens bzw. Eisenschwamm bestimmt sein.

Zur Ermittlung der Kosten für den Bezug elektrischer Energie aus dem Versorgungsnetz 2 kann die Steuereinrichtung 8 beispielsweise anhand der ermittelten Teilbetriebsweisen B1, B4, B6, B7 den Bezug an elektrischer Energie aus dem Versorgungsnetz 2 und hierauf aufbauend in Verbindung mit dem bekannten Preis P1 die zugehörigen Kosten ermitteln. Die Ermittlung kann mit derselben Zeitauflösung erfolgen, mit der auch die Teilbetriebsweisen B1, B4, B6, B7 bestimmt sind, beispielsweise sekundengenau. Die Ermittlung kann auch mit einer gröberen Zeitauflösung erfolgen, beispielsweise mit einer Auflösung von 1 Minute oder 15 Minuten. Auch ist es möglich, zwar zunächst mit einer hohen zeitlichen Auflösung zu arbeiten, beispielsweise sekundengenau, hierauf aufbauend jedoch für größere Zeiträume (beispielsweise 1 Minute, 5 Minuten, 15 Minuten) statistische Auswertungen vorzunehmen, beispielsweise Mittelwerte, maximale Werte, minimale Werte, Streuungen usw. zu ermitteln.

Die Anlagenbetriebsweise B1 kann beispielsweise im Sinne der Produktivität, eines ressourcenschonenden Betriebs, einer Bewertung des Verschleißes der DRI-Anlage 1 usw. bewertet werden. Ähnliche Bewertungen sind auch für die Elektrolysenbetriebsweise B4, die Wasserstoffspeicherbetriebsweise B6 und die Versorgungsbetriebsweise B7 möglich.

Die Bewertung des erwarteten finalen Anlagenzustands Z1' kann einen Anteil umfassen, der beispielsweise unter Verwertung eines energetischen Zustands der DRI-Anlage 1 - dies umfasst auch den energetischen Zustand von in der DRI-Anlage 1 befindlichen Produkten - ermittelt wird. Dadurch ist die Steuereinrichtung 8 in der Lage, die Bewertung des erwarteten finalen Anlagenzustands Z1' unter Berücksichtigung einer Energiemenge zu ermitteln, die beim späteren Betrieb der DRI-Anlage 1 über den Prognosehorizont PH hinaus aufgebracht werden muss.

In der Bewertung des erwarteten finalen Anlagenzustands Z1' kann weiterhin auch der durch den Betrieb der DRI-Anlage 1 angefallene Verschleiß berücksichtigt werden, also die Kosten durch den Verschleiß, der während des Produktionshorizonts PH aufgrund der Anlagenbetriebsweise B1 auftritt.

Die Bewertung des erwarteten finalen Elektrolysenzustands Z4' kann - insbesondere bei einer Elektrolyseanlage 4, die mit einer hohen Temperatur arbeitet - ebenfalls einen Anteil umfassen, der unter Verwertung eines energetischen Zustands der Elektrolyseanlage 4 ermittelt wird. Auch können in die Bewertung Konzentrationen an Elektrolytflüssigkeiten und Verschleißzustände eingehen.

Die Bewertung des erwarteten finalen Wasserstoffspeicherzustands Z6' ist meist sehr einfach. In der Regel handelt es sich lediglich um eine Konstante.

Die Bewertung des erwarteten finalen Versorgungszustands Z7' ist meist ebenfalls sehr einfach. Analog zum finalen Wasserstoffspeicherzustand Z6' handelt es sich meist lediglich um eine Konstante.

Die Bewertung der Produktivität der DRI-Anlage 1 ist meist ebenfalls relativ einfach. Sie ist in der Regel umso besser (das heißt der entsprechende Kostenfaktor umso kleiner), je größer die Menge an Ausgangsprodukt ist, die in einer bestimmten Zeiteinheit erzeugt wird. Im einfachsten Fall ist der entsprechende Kostenfaktor proportional zu der Zeit, die für die Produktion einer zuvor einmalig festgelegten Menge an Ausgangsprodukt erforderlich ist.

In die Kostenfunktion K können auch noch weitere Kostenfaktoren eingehen. Nachfolgend wird beispielhaft auf einige mögliche weitere Kostenfaktoren eingegangen.

So kann beispielsweise ein Kostenfaktor berücksichtigt werden, der für die Kosten für den sonstigen Betrieb der DRI-Anlage 1 steht, also die Kosten, die sich für den betrachteten Prognosehorizont PH ergeben, aber ohne Berücksichtigung der Kosten für die elektrische Energie. Die Kosten für den sonstigen Betrieb der DRI-Anlage 1 können beispielsweise die Kosten für weitere benötigte Einsatzstoffe (Ausgangsmaterialien) oder die Kosten für die Aufbereitung von Prozessmedien oder Kosten aufgrund von Umweltbelastungen umfassen, beispielsweise die Kosten für CO2-Abgaben. Der Kostenfaktor für den sonstigen Betrieb der DRI-Anlage 1 kann weiterhin Abschreibungen umfassen.

In analoger Weise können auch Kostenfaktoren berücksichtigt werden, die für die Kosten für den sonstigen Betrieb der Elektrolyseanlage 4 und des Wasserstoffspeichers 6 stehen. Für den Kostenfaktor für den Wasserstoffspeicher 6 können insbesondere auch Verluste an im Wasserstoffspeicher 6 befindlichem Wasserstoff berücksichtigt werden. Eine analoge Vorgehensweise ist gegebenenfalls auch für die Versorgungseinrichtung 7 möglich.

Weiterhin können auch andere Kosten des Gesamtsystems berücksichtigt werden, sofern derartige Kosten anfallen. Beispiele derartiger Kosten sind Umweltabgaben oder staatliche Förderungen.

In die Kostenfunktion K gehen im Ergebnis alle freien Steuervariablen für alle Teilsysteme 1, 4, 6, 7 ein. Insbesondere gehen in die Kostenfunktion K auch die Mengen an Wasserstoff und/oder Erdgas und/oder Ammoniak bzw. die zugehörigen Kosten ein.

In einem Schritt S7 löst die Steuereinrichtung 8 ein Optimierungsproblem. Die Lösung des Optimierungsproblems ist die Kombination derjenigen Teilbetriebsweisen B1, B4, B6, B7 -jeweils betrachtet über den Produktionshorizont PH -, bei der die Kostenfunktion K insgesamt minimal ist. Die Kostenfunktion K ist somit ein Funktional, das minimiert werden soll und auf Basis eines Anfangswertproblems mit Endbedingungen berechnet wird. Im Rahmen des Lösen des Optimierungsproblems variiert die Steuereinrichtung 8 für den Prognosehorizont PH die angesetzten Teilbetriebsweisen B1, B4, B6, B7. Das Variieren erfolgt unter Berücksichtigung des Produktionsplans PP und weiterer Randbedingungen wie beispielsweise Auslegungsgrenzen der verschiedenen Teilsysteme 1, 4, 6, 7. Dies gilt insbesondere auch für die Betriebsgrenzen der Versorgungseinrichtung 7, beispielsweise die Möglichkeiten zur Erzeugung, Speicherung und Lieferung von Ammoniak. Sofern vorgegeben, wird auch ein Produktionsplan der Elektrolyseanlage 4 mit berücksichtigt. Weiterhin berücksichtigt die Steuereinrichtung 8 beim Lösen des Optimierungsproblems, dass die Geschwindigkeiten, mit der die der DRI-Anlage 1 zugeführten Anteile an Wasserstoff, Erdgas und Ammoniak geändert werden können, begrenzt sind. Die Steuereinrichtung 8 berücksichtigt also, dass die Änderungen dieser Anteile eine gewisse Zeit benötigen. Prinzipiell ist jedoch eine beliebige Aufteilung in Wasserstoff, Erdgas und Ammoniak möglich. Weiterhin kann die Steuereinrichtung 8 mit berücksichtigen, dass eine Änderung der Aufteilung von Wasserstoff, Erdgas und Ammoniak Einfluss auf den Anteil an Kohlenstoff im von der DRI-Anlage 1 erzeugten Eisenschwamm haben kann und dadurch nachfolgende Prozesse beispielsweise thermisch und damit insbesondere in ihrem Energiebedarf beeinflusst werden. Oftmals ist es von Vorteil, einen Mindestanteil an Erdgas zu verwenden. Dies kann durch eine entsprechende Ungleichheitsnebenbedingung gewährleistet werden. Soweit gegeben, umfasst das Variieren der Versorgungsbetriebsweise B7 auch ein Variieren der Betriebsweise der Erzeugungseinrichtung.

Beim Variieren der Betriebsweisen B1, B4, B6, B7 kann die Steuereinrichtung 10 zusätzlich auch weitere Bedingungen berücksichtigen. Beispiele derartiger Bedingungen können beispielsweise Vorgaben für die erwarteten finalen Teilzustände Z1', Z4', Z6', Z7' sein. Beispielsweise kann als Vorgabe festgelegt sein, dass der Wasserstoffspeichers 6 am Ende des Prognosehorizonts PH einen ganz bestimmten Füllgrad aufweist oder der Füllgrad des Wasserstoffspeichers 6 am Ende des Prognosehorizonts PH in einem vorbestimmten Rahmen liegt. Analoge Vorgaben sind gegebenenfalls auch für die Versorgungseinrichtung 7 möglich. Die Berücksichtigung derartiger Bedingungen kann insbesondere durch sogenannte Gleichheitsnebenbedingungen und/oder Ungleichheitsnebenbedingungen erfolgen. Auch andere Bedingungen sind möglich, beispielsweise dass die aus dem Versorgungsnetz 2 bezogene Energie einen vorgegebenen Maximalwert nicht übersteigt oder dass die Produktion bestimmter Produkte zu einem vorgegebenen Zeitpunkt abgeschlossen ist.

Optimierungsprobleme als solche, deren Ansatz und Vorgehensweisen zum Lösen derartiger Optimierungsprobleme sind Fachleuten bekannt. Sie werden auch im eingangs genannten Stand der Technik vom Ansatz her so ergriffen.

Mit der Ausführung des Schrittes S7 stehen die variierten und dadurch optimierten Teilbetriebsweisen B1, B4, B6, B7 fest. Die Steuereinrichtung 8 kann daher in einem Schritt S8 die Teilsysteme 1, 4, 6, 7 gemäß der variierten Teilbetriebsweisen B1, B4, B6, B7 betreiben. Dies erfolgt zunächst für den Beginn des Prognosehorizonts PH.

In einem Schritt S9 prüft die Steuereinrichtung 8, ob ihr neue Informationen zur Verfügung stehen. Wenn dies nicht der Fall ist, geht die Steuereinrichtung 8 zum Schritt S8 zurück. Bei der erneuten Ausführung des Schrittes S8 betreibt die Steuereinrichtung 8 die Teilsysteme 1, 4, 6, 7 weiterhin gemäß der variierten Teilbetriebsweisen B1, B4, B6, B7. Sie berücksichtigt dabei den Fortschritt in der Zeit t.

Wenn der Steuereinrichtung 8 neue Informationen zur Verfügung stehen, geht die Steuereinrichtung 8 zu einem Schritt S10 über. Im Schritt S10 prüft die Steuereinrichtung 8, ob die Information ein Befehl zum Beenden des Betriebs des Gesamtsystems ist. Wenn dies der Fall ist, beendet die Steuereinrichtung 8 in einem Schritt S11 den Betrieb des Gesamtsystems. Anderenfalls geht die Steuereinrichtung 8 zum Schritt S1 zurück. Je nach Art der neuen Informationen kann die Steuereinrichtung 8 alternativ auch zum Schritt S2 oder zum Schritt S3 zurückgehen.

Im Ergebnis wird durch die Vorgehensweise gemäß FIG 2 die Ermittlung der Teilbetriebsweisen B1, B4, B6, B7 immer wieder mit einem bestimmten Prognosehorizont PH wiederholt. Die Ermittlung wird also im Sinne einer permanenten Vorhersage ausgeführt und laufend an den erwarteten Preis P und den Produktionsplan PP angepasst.

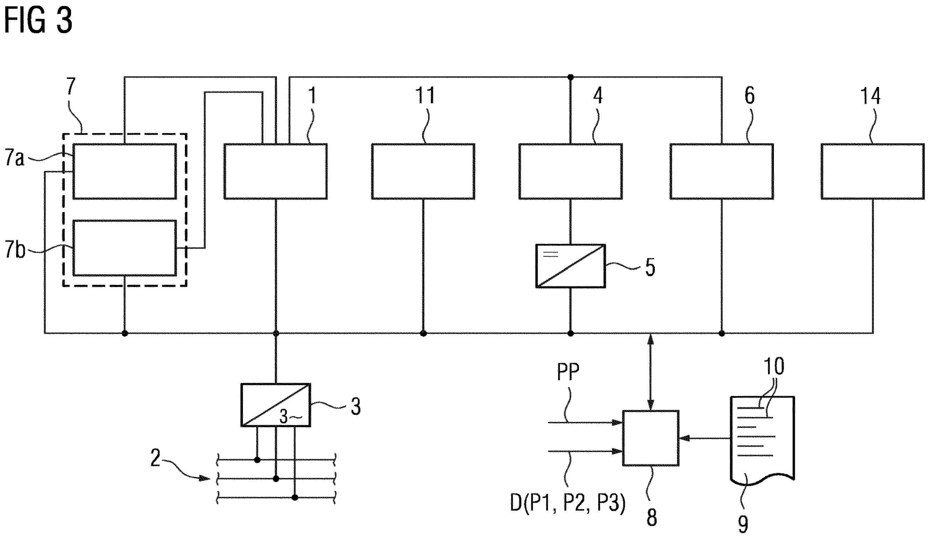

Das Gesamtsystem von FIG 3 weist die gleichen Komponenten wie das Gesamtsystem von FIG 1 auf. Zusätzlich umfasst das Gesamtsystem jedoch entsprechend der Darstellung in FIG 3 einen elektrischen Energiespeicher 11. Der Energiespeicher 11 ist zumindest zum Aufnehmen von elektrischer Energie, eventuell auch zum Abgeben von elektrischer Energie, direkt oder indirekt mit dem Versorgungsnetz 2 verbunden. Der Energiespeicher 11 ist weiterhin zum Abgeben elektrischer Energie mit der DRI-Anlage 1 und der Elektrolyseanlage 4 verbunden. Nimmt der Energiespeicher 11 elektrische Energie auf, wird sie stets aus dem Versorgungsnetz 2 bezogen. Gibt der Energiespeicher 11 elektrische Energie ab, wird sie primär zur Deckung des Bedarfs der DRI-Anlage 1 und der Elektrolyseanlage 4 und nur sekundär zur Einspeisung in das Versorgungsnetz 2 verwendet. Im Ergebnis kann somit - je nachdem, ob die vom Energiespeicher 11 abgegebene elektrische Energie größer oder kleiner als die von der DRI-Anlage 1 und Elektrolyseanlage 4 verbrauchte elektrische Energie ist - temporär elektrische Energie in das Versorgungsnetz 2 eingespeist oder aus dem Versorgungsnetz 2 bezogen werden.

Es muss einstellbar sein, ob und in welchem Umfang dem Energiespeicher 11 elektrische Energie zugeführt wird bzw. ob und in welchem Umfang der elektrische Energiespeicher 11 elektrische Energie abgibt. Zu diesem Zweck ist in der Regel eine bidirektional betreibbare Umrichtereinheit vorhanden. Diese Umrichtereinheit ist in FIG 1 nicht mit dargestellt. Sie wird vielmehr als Bestandteil des Energiespeichers 11 angesehen.

Die genaue Art und Weise der elektrischen Verbindung der DRI-Anlage 1, der Elektrolyseanlage 4 und des Energiespeichers 11 untereinander und mit dem Versorgungsnetz 2 ist von untergeordneter Bedeutung. Insbesondere können den verschiedenen Teilsystemen 1, 4 und 11 nach Bedarf Gleichrichter 5, Wechselrichter und sonstige Umrichter 3 zugeordnet sein. Es sollte jedoch gewährleistet sein, dass ein Transfer elektrischer Energie vom Energiespeicher 11 zu der DRI-Anlage 1 und der Elektrolyseanlage 4 ohne Umweg über das Versorgungsnetz 2 möglich ist.

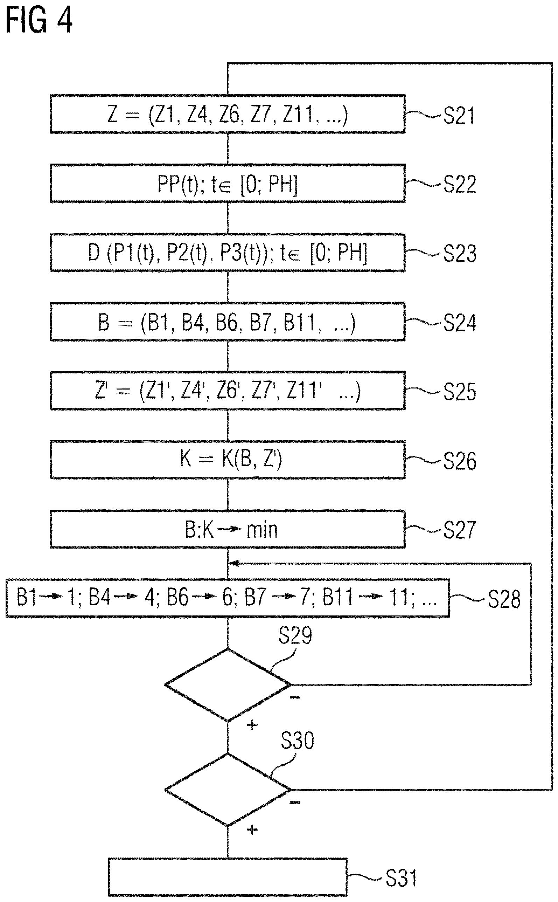

Der elektrische Energiespeicher 11 ist ein weiteres Teilsystem des Gesamtsystems und wird von der Steuereinrichtung 8 auch als solches behandelt. Die Einbindung des elektrischen Energiespeichers 11 in das Betriebsverfahren ist in FIG 4 dargestellt.

Die Schritte S21 bis S31 von FIG 4 korrespondieren vom Ansatz her mit den Schritten S1 bis S11 von FIG 2. Entsprechend der Darstellung in FIG 4 ist der Steuereinrichtung 8 jedoch als weiterer aktueller Zustand Z11 ein aktueller Speicherzustand Z11 des elektrischen Energiespeichers 11 bekannt. Der Teilzustand Z11 umfasst zumindest den Ladezustand des Energiespeichers 11, also das Ausmaß, zu dem der Energiespeicher 11 geladen ist. Der Teilzustand Z11 kann auch weitere Größen umfassen, beispielsweise eine Temperatur des Energiespeichers 11 oder einen maximal möglichen oder zulässigen Lade- und Entladestrom. Weiterhin kann der Teilzustand Z11 einen Verschleißzustand des Energiespeichers 11 umfassen.

Aus den gleichen Gründen umfassen die von der Steuereinrichtung 8 angesetzten und variierten Betriebsweisen zusätzlich eine Speicherbetriebsweise B11 für den elektrischen Energiespeicher 11. Die Teilbetriebsweise B11 für den Energiespeicher 11 - nachfolgend auch als Energiespeicherbetriebsweise B11 bezeichnet - kann in manchen Fällen von der Steuereinrichtung 8 oftmals ebenfalls eigenständig und relativ flexibel festgelegt werden. Die Steuereinrichtung 8 muss lediglich beachten, dass der Ladezustand des Energiespeichers 11 nicht unter 0 % fällt und nicht über 100 % steigt und im übrigen die Auslegungsgrenzen der Energiespeichers 11 (beispielsweise der maximale Ladestrom und der maximale Entladestrom) beachtet werden.

Ebenso umfassen die erwarteten finalen Zustände zusätzlich einen unter Verwertung des aktuellen Speicherzustands Z11 und der angesetzten Speicherbetriebsweise B11 ermittelten finalen Speicherzustand Z11'.

Schließlich variiert die Steuereinrichtung 8 im Rahmen der Optimierung auch die Speicherbetriebsweise B11 und hierauf aufbauend den erwarteten finalen Speicherzustand Z11'. Hierbei berücksichtigt die Steuereinrichtung 8 beim Variieren der Teilbetriebsweisen B1, B4, B6, B7, B11 vorzugsweise auch einen minimalen und einen maximalen Ladezustand des elektrischen Energiespeichers 11 und/oder einen mittleren Ladezustand des elektrischen Energiespeichers 11. Die Berücksichtigung kann dadurch erfolgen, dass Abweichungen von dem mittleren Ladezustand mit einem - wenn auch relativ geringen - Faktor gewichtet in die Kostenfunktion K eingehen und so "bestraft" werden. Auch kann gefordert sein, dass keine Energie in das Versorgungsnetz 2 eingespeist wird oder dass die aus dem Versorgungsnetz 2 bezogene Energie einen vorgegebenen Maximalwert nicht übersteigt. Die Bewertung des erwarteten finalen Energiespeicherzustands Z11' kann einen Anteil umfassen, mit dem der durch den Betrieb des Energiespeichers 11 angefallene Verschleiß berücksichtigt wird, also die Kosten durch den Verschleiß, der während des Produktionshorizonts PH aufgrund der Speicherbetriebsweise B11 auftritt.

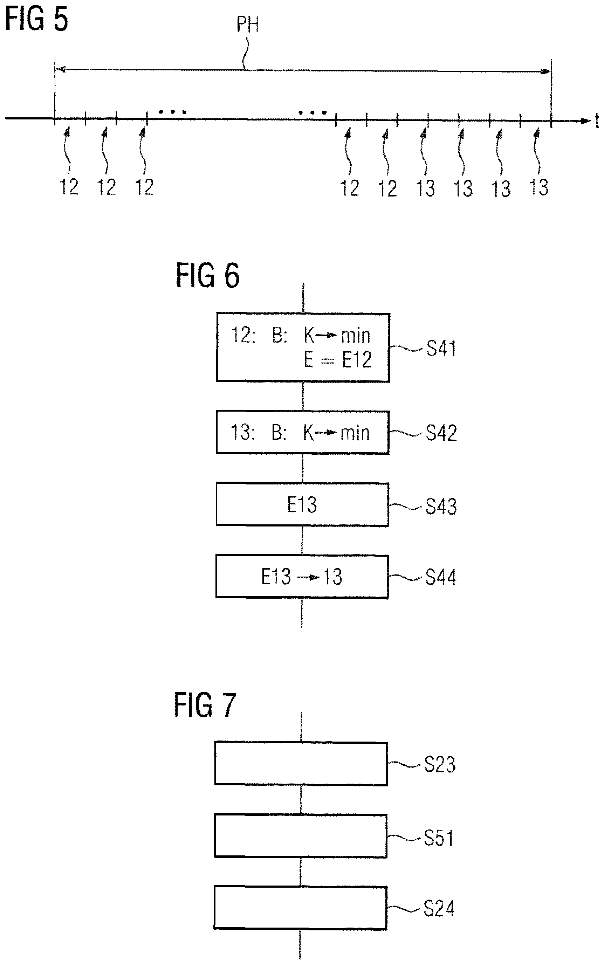

Nachfolgend wird in Verbindung mit den FIG 5 und 6 eine besonders vorteilhafte Ausgestaltung der vorliegenden Erfindung erläutert. Im Rahmen dieser Ausgestaltung ist der Energiespeicher 11 erforderlich.

Gemäß FIG 5 ist der Prognosehorizont PH in eine Anzahl von zeitlich frühen Zeitabschnitten 12 und eine Anzahl von zeitlich späten Zeitabschnitten 13 unterteilt. Bei einem üblichen Prognosehorizont PH von 24 Stunden können beispielsweise die Zeitabschnitte 12, 13 eine Dauer von jeweils 15 Minuten aufweisen und weiterhin 92 frühe Zeitabschnitte 12 und 4 späte Zeitabschnitte vorhanden sein. Die genannte Dauer und auch die genannten Anzahlen von frühen und späten Zeitabschnitten 12, 13 sind jedoch nur rein beispielhaft zu verstehen.

Im Falle einer Aufteilung des Prognosehorizonts PH in frühe und späte Zeitabschnitte 12, 13 kann der Schritt S26 von FIG 4 entsprechend der Darstellung in FIG 6 ausgestaltet sein.

Gemäß FIG 6 ist der Schritt S26 von FIG 4 in Schritte S41 und S42 unterteilt. Im Schritt S41 optimiert die Steuereinrichtung 8 die Betriebsweisen B1, B4, B6, B7, B11 für die zeitlich frühen Zeitabschnitte 12. Im Schritt S42 optimiert die Steuereinrichtung 8 die Betriebsweisen B1, B4, B6, B7, B11 für die zeitlich späten Zeitabschnitte 13. Der Unterschied zwischen den Schritten S41 und S42 besteht darin, dass die Steuereinrichtung 8 bei der Optimierung des Schrittes S41 die zusätzliche Randbedingung berücksichtigt, dass das Gesamtsystem während der zeitlich frühen Zeitabschnitte 12 eine für den jeweiligen zeitlich frühen Zeitabschnitt 12 vorbestimmte Menge E12 an elektrischer Energie aus dem elektrischen Versorgungsnetz 2 bezieht. Die Menge E12 kann zwar individuell für den jeweiligen frühen Zeitabschnitt 12 bestimmt sein. Sie ist aber bekannt. Die Betriebsweise B11 des elektrischen Energiespeichers 11 wird daher derart bestimmt, dass die jeweilige während des jeweiligen frühen Zeitabschnitts 12 aus dem Versorgungsnetz 2 bezogene Menge E an elektrischer Energie mit diesem Wert übereinstimmt. Im Schritt S42 hingegen wird keine derartige Randbedingung berücksichtigt. Die Menge an elektrischer Energie, die das Gesamtsystem aus dem elektrischen Versorgungsnetz 2 bezieht, stellt sich während der späten Zeitabschnitte 13 also entsprechend der Optimierung der Betriebsweisen B1, B4, B6, B7, B11 ein. Somit variiert die Steuereinrichtung 8 im Rahmen der Optimierung für die zeitlich späten Zeitabschnitte 13 auch die Speicherbetriebsweise B11 und hierauf aufbauend den erwarteten finalen Speicherzustand Z11'.

Die späten Zeitabschnitte 13 liegen oftmals so weit in der Zukunft, dass für die späten Zeitabschnitte 13 an einer Energiebörse Energiemengen fest geordert werden können. Es ist daher möglich, die Vorgehensweise von FIG 6 durch Schritte S43 und S44 zu ergänzen. Im Schritt S43 ordert die Steuereinrichtung 8 für die späten Zeitabschnitte 13 an einer Energiebörse Energiemengen. Im Schritt S44 ordnet die Steuereinrichtung 8 die entsprechenden Energiemengen den entsprechenden späten Zeitabschnitten 13 zu, legt also für die zeitlich späten Zeitabschnitte 13 die entsprechenden Mengen an elektrischer Energie fest, die während der zeitlich letzten Zeitabschnitte 13 jeweils aus dem elektrischen Versorgungsnetz 2 bezogen werden sollen.

FIG 3 zeigt auch eine weitere Erweiterung des Gesamtsystems von FIG 1. Gemäß FIG 3 weist das Gesamtsystem als weiteres Teilsystem eine Stromerzeugungseinrichtung 14 auf. Mittels der Stromerzeugungseinrichtung 14 ist auf regenerative Art und Weise - also mit Sonnenlicht oder Windkraft, eventuell auch mittels Wasserkraft oder Geothermie - elektrische Energie erzeugbar. In diesem Fall ist die Stromerzeugungseinrichtung 14 zur Übertragung elektrischer Energie direkt oder indirekt mit den übrigen elektrische Energie aufnehmenden oder abgebenden Teilsystemen 1, 4, 11 und auch dem elektrischen Versorgungsnetz 2 verbunden. Ein für die Stromerzeugungseinrichtung 14 meist erforderlicher Umrichter kann als Bestandteil der Stromerzeugungseinrichtung 14 angesehen werden. Er ist in FIG 3 nicht mit dargestellt. Vorzugsweise ist die Zuführung elektrischer Energie von der Stromerzeugungseinrichtung 14 zu den Teilsystemen 1, 4, 11 ohne Umweg über das Versorgungsnetz 2 möglich.

Sofern die Stromerzeugungseinrichtung 14 vorhanden ist, ist die Vorgehensweise von FIG 4 gemäß FIG 7 zunächst dahingehend modifiziert, dass zusätzlich ein Schritt S51 vorhanden ist. Der Schritt S51 ist dem Schritt S24 vorgeordnet. Er kann dem Schritt S24 entsprechend der Darstellung in FIG 7 unmittelbar vorgeordnet sein. Dies ist aber nicht zwingend erforderlich. Im Schritt S51 wird der Steuereinrichtung 8 für den Prognosehorizont PH eine elektrische Energie bekannt, die (voraussichtlich) mittels der Stromerzeugungseinrichtung 14 erzeugt werden kann. Eine derartige Prognose kann beispielsweise unter Verwertung einer lokalen Wettervorhersage für den Standort der Stromerzeugungseinrichtung 14 vorgenommen werden.

Weiterhin ist die Vorgehensweise von FIG 4 dahingehend modifiziert, dass im Schritt S26 bei der Kostenfunktion K die mittels der Stromerzeugungseinrichtung 14 erzeugbare erwartete elektrische Energie berücksichtigt wird. Dadurch ergeben sich im Schritt S27 andere Teilbetriebsweisen B1, B4, B6, B7, B11, für welche die Kostenfunktion K minimal wird.

Nachstehend werden für die DRI-Anlage 1, die Elektrolyseanlage 4 (einschließlich des Wasserstoffspeichers 6) und die Stromerzeugungseinrichtung 14 mögliche Modelle erläutert, die zur Ermittlung des jeweiligen Kostenfaktors verwendet werden können. Diese Modelle sind innerhalb der Steuereinrichtung 8 implementiert und werden von der Steuereinrichtung 8 im Rahmen des Schrittes S6 bzw. des Schrittes S26 ausgewertet.

Für die DRI-Anlage 1 werden - jeweils für den Prognosehorizont PH - eine Funktion v und eine elektrische Sollleistung P* angesetzt. Die Funktion v ist eine Funktion der Zeit t. Die Sollleistung P* kann eine Konstante sein. Die Sollleistung P* wird mit der Funktion v multipliziert. Das Ergebnis ist die tatsächliche elektrische Leistung P, mit welcher die DRI-Anlage 1 betrieben wird:

$$P = v(t)P^*. \qquad (1)$$

Die Funktion v ist definiert für positive Werte der Zeit t und weist einen Wertebereich von vmin bis 1 auf, wobei vmin seinerseits einen Wert zwischen 0 und 1 aufweist. vmin ist eine Funktion des Zustands die der DRI-Anlage 1. Durch den aktuellen Wert von vmin wird berücksichtigt, dass es nicht möglich ist, die tatsächliche Leistung P in jedem Zustand der DRI-Anlage 1 beliebig zu reduzieren. Dies ist vielmehr vom Zustand der DRI-Anlage 1 abhängig. Der Zustand der DRI-Anlage 1 muss der Steuereinrichtung 8 daher bekannt sein. In der Regel wird versucht werden, die DRI-Anlage 1 möglichst gleichmäßig zu betreiben. Der Wert von vmin wird meist nur knapp unter 1 liegen.

Der elektrische Gesamt-Energiebedarf der DRI-Anlage 1 ist eine Funktion des Verlaufs der Funktion v. Es ist möglich, dass die Steuereinrichtung 8 den elektrischen Gesamt-Energiebedarf der DRI-Anlage 1 eigenständig ermittelt. Alternativ kann der elektrische Gesamt-Energiebedarf der DRI-Anlage 1 beispielsweise vorgegeben werden oder über die Energiebilanz (Abstrahlung) der DRI-Anlage 1 ermittelt werden.

Die Funktion v kann von der Steuereinrichtung 8 genutzt werden, um Einfluss auf die Betriebsweise der DRI-Anlage 1 zu nehmen. Selbstverständlich verringert sich das Ausmaß, in dem der Eisenschwamm produziert wird, wenn die Funktion v einen Wert unterhalb von 1 aufweist. Die Steuereinrichtung 8 kann daher zugehörige zeitliche Verzögerung T ermitteln und entsprechend bewerten:

$$Ka = k1 + k2T. \qquad (2)$$

k1 ist eine Konstante mit der Einheit "Währung", beispielsweise 2000 Euro. k2 ist eine Konstante mit der Einheit "Währung pro Zeit", beispielsweise 1000 Euro pro Minute. T ist die Zeitdifferenz, um welche die Produktion der DRI-Anlage 1 für die Erzeugung einer bestimmten Menge an Eisenschwamm reduziert wird, beispielsweise in Minuten.

Dem Kostenfaktor Ka steht jedoch ein erhebliches Einsparpotenzial bei den Energiekosten gegenüber, sofern es gelingt, einen hohen Verbrauch an elektrischer Energie der DRI-Anlage 1 in Zeiten zu verlagern, in denen die aus dem Versorgungsnetz 2 bezogene elektrische Energie kostengünstig ist. Hier zeigen sich die Vorteile der vorliegenden Erfindung, wenn also der Betrieb der DRI-Anlage 1, der Elektrolyseanlage 4, des Wasserstoffspeichers 6, der Versorgungseinrichtung 7 und gegebenenfalls auch des elektrischen Energiespeichers 11 gemeinsam optimiert werden. Noch größer können die Vorteile sein, wenn zusätzlich eigenständig mittels der Stromerzeugungseinrichtung 14 Strom erzeugt werden kann.

Der Kostenanteil Kb, der für die DRI-Anlage 1 aufgrund der zugeführten elektrischen Energie verursacht wird, kann dadurch ermittelt werden, dass über den Produktionshorizont PH die jeweiligen momentanen Kosten integriert werden. Die momentanen Kosten können zu

$$k3(t)P(t) \qquad (3)$$

ermittelt werden. Hierbei ist k3 ein zumindest von der Zeit t abhängiger Faktor, der die Kosten für den Bezug elektrischer Energie aus dem Versorgungsnetz 2 widerspiegelt.

In analoger Weise können auch weitere Kostenanteile Kc, Kd und Ke ermittelt werden, die für die DRI-Anlage 1 aufgrund des zugeführten Wasserstoffs, Erdgases und Ammoniak verursacht werden.

Weiterhin wird im Rahmen der Direktreduktion auch Kohlendioxid erzeugt, für das oftmals Zertifikate erforderlich sind, wenn es in die Umwelt abgegeben wird. Auch dieser Kostenanteil sollte berücksichtigt werden.

Der Kostenanteil, der für die DRI-Anlage 1 insgesamt bestimmt wird, ergibt sich als Summe der vorstehend erläuterten Kostenanteile.

Die Elektrolyseanlage 4 produziert Wasserstoff und gibt ihn ab, der Wasserstoffspeicher 6 nimmt Wasserstoff auf und gibt ihn ab. Es sollte berücksichtigt werden, dass gespeicherter Wasserstoff teilweise entweicht. Die Verluste können, wie bereits erwähnt, bei bis zu 0,5 % der gespeicherten Menge an Wasserstoff pro Tag liegen. Weiterhin wird Energie benötigt, um den Wasserstoff unter Druck in den Wasserstoffspeicher 6 zu drücken. Diese Energie kann beim Entnehmen des Wasserstoffs aus dem Wasserstoffspeicher 6 meist nicht mehr rückgewonnen werden. Die - gemeinsamen - Kosten für den Betrieb der Elektrolyseanlage 4 und des Wasserstoffspeichers 6 können beispielsweise dadurch ermittelt werden, dass über den Produktionshorizont PH die jeweiligen momentanen Kosten integriert werden. Die momentanen Kosten können zu

$$k3(t)P'(t) + k4H'(t) \qquad\qquad (4)$$

ermittelt werden. Hierbei ist k3 der bereits in Verbindung mit Gleichung 3 erläuterte Faktor. P' ist die aus dem Versorgungsnetz 2 bezogene elektrische Energie. Der Faktor k5 ist im einfachsten Fall eine Konstante. Gegebenenfalls kann auch der Faktor k5 zeitabhängig sein. H' ist die Menge an Wasserstoff, die aktuell gerade verloren geht, also die Ableitung der Menge an gespeichertem Wasserstoff als Funktion der Zeit t. Gegebenenfalls kann in den Kosten auch der Verschleiß der Elektrolyseanlage 4 mit berücksichtigt werden.

In analoger Weise können beispielsweise auch die Kosten für die Erzeugung von Ammoniak aus Wasserstoff und für die Speicherung des Ammoniaks berücksichtigt werden. Es ist lediglich zusätzlich zu berücksichtigen, dass für die Produktion von Ammoniak nicht nur Energie benötigt wird, sondern auch Wasserstoff verbraucht wird. Der benötigte Stickstoff kann in der Regel aus Luft entnommen werden. Unter Umständen fallen jedoch Kosten für die Absonderung von Sauerstoff und anderen Gasen aus der Luft an. Auch ein etwaiger Verschleiß der Erzeugungseinrichtung kann berücksichtigt werden.

Wenn die Stromerzeugungseinrichtung 14 den übrigen Teilsystemen 1, 4, 6, 7 und gegebenenfalls 11 direkt zugeordnet ist, also insbesondere die von der Stromerzeugungseinrichtung 14 erzeugt elektrische Energie den Teilsystemen 1, 4, 6, 7 und gegebenenfalls 11 ohne Umweg über das Versorgungsnetz 2 zugeführt werden kann, ist die Erzeugung der elektrischen Energie kostenfrei. Übersteigt sie (zeitweise) den elektrischen Energieverbrauch der übrigen Teilsysteme 1, 4, 6, 7 und gegebenenfalls 11, wird die elektrische Energie in das Versorgungsnetz 2 eingespeist. Insbesondere in diesem Fall können die Kosten für die Stromerzeugungseinrichtung 14 sogar negativ sein.

Die vorliegende Erfindung weist viele Vorteile auf. Insbesondere ist eine umfassende Optimierung des Betriebs des Gesamtsystems, bestehend aus den Teilsystemen 1, 4, 6 und 7 und eventuell zusätzlich auch den Teilsystemen 11 und 14, möglich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1 | Anlage |
| 2 | Versorgungsnetz |
| 3 | Umrichter |
| 4 | Elektrolyseanlage |
| 5 | Gleichrichter |
| 6 | Wasserstoffspeicher |
| 7 | Versorgungseinrichtung |
| 7a, 7b | Speichereinrichtungen |
| 8 | Steuereinrichtung |
| 9 | Steuerprogramm |
| 10 | Maschinencode |
| 11 | Energiespeicher |
| 12, 13 | Zeitabschnitte |
| 14 | Stromerzeugungseinrichtung |

| | |
|---|---|
| B, B1, B4, B6, B7, B11 | Betriebsweisen |
| D | Daten |

| E; E12, E13 | Mengen an Energie |
| K | Kostenfunktion |
| P1 bis P3 | Preise |
| PH | Prognosehorizont |
| PP | Produktionsplan |
| S1 bis S51 | Schritte |
| t | Zeit |
| Z, Z1, Z4, Z6, Z7, Z11 | aktuelle Zustände |
| Z', Z1', Z4', Z6', Z7', Z11' | erwartete finale Zustände |

**Patentansprüche**

1. Betriebsverfahren für ein Gesamtsystem,

- wobei das Gesamtsystem als Teilsysteme eine DRI-Anlage (1), eine Elektrolyseanlage (4), einen Wasserstoffspeicher (6) und eine Versorgungseinrichtung (7) umfasst,
- wobei die DRI-Anlage (1) und die Elektrolyseanlage (4) zur Übertragung elektrischer Energie direkt oder indirekt mit einem elektrischen Versorgungsnetz (2) verbunden sind,
- wobei die DRI-Anlage (1), die Elektrolyseanlage (4) und der Wasserstoffspeicher (6) zum Transfer von Wasserstoff direkt oder indirekt miteinander verbunden sind,
- wobei die DRI-Anlage (1) und die Versorgungseinrichtung (7) zum Zuführen von Erdgas und/oder Ammoniak zur DRI-Anlage (1) miteinander verbunden sind,
- wobei einer das Gesamtsystem steuernden Steuereinrichtung (8) als aktuelle Zustände ein aktueller Anlagenzustand (Z1) der DRI-Anlage (1), ein aktueller Elektrolysenzustand (Z4) der Elektrolyseanlage (4), ein aktueller Wasserstoffspeicherzustand (Z6) des Wasserstoffspeichers (6) und ein aktueller Versorgungszustand (Z7) der Versorgungseinrichtung (7) bekannt sind,
- wobei der Steuereinrichtung (8) für einen Prognosehorizont (PH) zumindest ein gewünschter Produktionsplan (PP) der DRI-Anlage (1), ein zumindest erwarteter Preis (P1) für über das elektrische Versorgungsnetz (2) bezogene elektrische Energie und ein zumindest erwarteter Preis (P2, P3) für das Erdgas und/oder den Ammoniak bekannt sind,
- wobei die Steuereinrichtung (8) für den Prognosehorizont Betriebsweisen (B1, B4, B6, B7) ansetzt und für das Ende des Prognosehorizonts (PH) erwartete finale Zustände (Z1', Z4', Z6', Z7') ermittelt,
- wobei die Betriebsweisen (B1, B4, B6, B7) eine Anlagenbetriebsweise (B1) für die DRI-Anlage (1), eine Elektrolysenbetriebsweise (B4) für die Elektrolyseanlage (4), eine Wasserstoffspeicherbetriebsweise (B6) für den Wasserstoffspeicher (6) und eine Versorgungsbetriebsweise (B7) für die Versorgungseinrichtung (7) umfassen,
- wobei die erwarteten finalen Zustände (Z1', Z4', Z6', Z7') einen unter Verwertung des aktuellen Anlagenzustands (Z1) und der angesetzten Anlagenbetriebsweise (B1) ermittelten finalen Anlagenzustand (Z1'), einen unter Verwertung des aktuellen Elektrolysenzustands (Z4) und der angesetzten Elektrolysenbetriebsweise (B4) ermittelten erwarteten finalen Elektrolysenzustand (Z4'), einen unter Verwertung des aktuellen Wasserstoffspeicherzustands (Z6) und der angesetzten Wasserstoffspeicherbetriebsweise (B6) ermittelten erwarteten finalen Wasserstoffspeicherzustand (B6') und einen unter Verwertung des aktuellen Versorgungszustands (Z7) und der angesetzten Versorgungsbetriebsweise (B7) ermittelten erwarteten finalen Versorgungszustand (Z7') umfassen,
- wobei die Steuereinrichtung (8) für den Prognosehorizont (PH) die angesetzten Betriebsweisen (B1, B4, B6, B7) und hierauf aufbauend die erwarteten finalen Zustände (Z1', Z4', Z6', Z7') variiert, so dass eine Kostenfunktion (K) minimiert wird,
- wobei in die Kostenfunktion (K) die Kosten für den Bezug elektrischer Energie aus dem elektrischen Versorgungsnetz (2) und für den Verbrauch an Erdgas und/oder Ammoniak und/oder die Betriebsweisen (B1, B4, B6, B7) der DRI-Anlage (1), der Elektrolyseanlage (4), des Wasserstoffspeichers (6) und/oder der Versorgungseinrichtung (7) und/oder Bewertungen der erwarteten finalen Zustände (Z1', Z4', Z6', Z7') und/oder eine Produktivität der DRI-Anlage (1) eingehen und
- wobei die Steuereinrichtung (8) die Teilsysteme (1, 4, 6, 7) zumindest für den Beginn des Prognosehorizonts (PH) gemäß der jeweiligen variierten Betriebsweise (B1, B4, B6, B7) betreibt.

2. Betriebsverfahren nach Anspruch 1,
**dadurch gekennzeichnet,**

- **dass** das Gesamtsystem als weiteres Teilsystem einen elektrischen Energiespeicher (11) umfasst,
- **dass** der elektrische Energiespeicher (11) zur Übertragung elektrischer Energie direkt oder indirekt mit der DRI-Anlage (1), der Elektrolyseanlage (4) und dem elektrischen Versorgungsnetz (2) verbunden ist,
- **dass** der Steuereinrichtung (8) als weiterer aktueller Zustand (Z11) ein aktueller Speicherzustand (Z11) des elektrischen Energiespeichers (11) bekannt ist und die von der Steuereinrichtung (8) angesetzten und variierten Betriebsweisen zusätzlich eine Speicherbetriebsweise (B11) für den elektrischen Energiespeicher (11) umfassen,
- **dass** die erwarteten finalen Zustände zusätzlich einen unter Verwertung des aktuellen Speicherzustands (Z11) und der angesetzten Speicherbetriebsweise (B11) ermittelten finalen Speicherzustand (Z11') umfassen,
- **dass** die Steuereinrichtung (8) auch die Speicherbetriebsweise (B11) und hierauf aufbauend den erwarteten finalen Speicherzustand (Z11') variiert.

3. Betriebsverfahren nach Anspruch 2,
**dadurch gekennzeichnet,**

- **dass** der Prognosehorizont (PH) in eine Anzahl von zeitlich frühen Zeitabschnitten (12) und eine Anzahl von zeitlich späten Zeitabschnitten (13) unterteilt ist,
- **dass** die Steuereinrichtung (8) die Speicherbetriebsweise (B11) für die zeitlich frühen Zeitabschnitte (12) derart ermittelt, dass das Gesamtsystem während der zeitlich frühen Zeitabschnitte (12) eine für den jeweiligen zeitlich frühen Zeitabschnitt (12) vorbestimmte Menge (E12) an elektrischer Energie aus dem elektrischen Versorgungsnetz (2) bezieht, und
- **dass** die Steuereinrichtung (8) zumindest für die zeitlich späten Zeitabschnitte (13) auch die Speicherbetriebsweise (B11) und hierauf aufbauend den erwarteten finalen Speicherzustand (Z11') variiert.

4. Betriebsverfahren nach Anspruch 3,
**dadurch gekennzeichnet,**
**dass** die Steuereinrichtung (8) für die zeitlich späten Zeitabschnitte (13) Mengen (E13) an elektrischer Energie festlegt, die während der zeitlich letzten Abschnitte (13) jeweils aus dem elektrischen Versorgungsnetz (2) bezogen werden sollen.

5. Betriebsverfahren nach Anspruch 2, 3 oder 4,
**dadurch gekennzeichnet,**
**dass** die Steuereinrichtung (8) beim Variieren der Betriebsweisen (B1, B4, B6, B7, B11) einen minimalen und einen maximalen Ladezustand des elektrischen Energiespeichers (11) und/oder einen mittleren Ladezustand des elektrischen Energiespeichers (11) berücksichtigt.

6. Betriebsverfahren nach einem der obigen Ansprüche,
**dadurch gekennzeichnet,**

- **dass** das Gesamtsystem als weiteres Teilsystem eine Stromerzeugungseinrichtung (14) aufweist, mittels derer auf regenerative Art und Weise elektrische Energie erzeugbar ist,
- **dass** die Stromerzeugungseinrichtung (14) zur Übertragung elektrischer Energie direkt oder indirekt mit der DRI-Anlage (1), der Elektrolyseanlage (4) und dem elektrischen Versorgungsnetz (2) verbunden ist,
- **dass** der Steuereinrichtung (8) für den Prognosehorizont (PH) zusätzlich eine mittels der Stromerzeugungseinrichtung (14) erzeugbare erwartete elektrische Energie bekannt ist und
- **dass** die Steuereinrichtung (8) beim Variieren der Betriebsweisen (B1, B4, B6, B7) die mittels der Stromerzeugungseinrichtung (14) erzeugbare erwartete elektrische Energie berücksichtigt.

7. Betriebsverfahren nach einem der obigen Ansprüche,
**dadurch gekennzeichnet,**
**dass** in die Kostenfunktion (K) Verluste an im Wasserstoffspeicher (6) befindlichem Wasserstoff eingehen.

8. Betriebsverfahren nach einem der obigen Ansprüche,
**dadurch gekennzeichnet,**
**dass** die Steuereinrichtung (8) beim Variieren der Betriebsweisen (B1, P4, B6, B7) einen minimalen und einen maximalen Füllstand des Wasserstoffspeichers (6) und/oder einen mittleren Füllstand des Wasserstoffspeichers (6) berücksichtigt.

9. Betriebsverfahren nach einem der obigen Ansprüche,
**dadurch gekennzeichnet,**

- **dass** die Versorgungseinrichtung (7) eine Erzeugungseinrichtung zum Erzeugen von Ammoniak mit oder ohne zugeordnete Speichereinrichtung (7b) für Ammoniak umfasst,
- **dass** die Erzeugungseinrichtung zur Übertragung elektrischer Energie direkt oder indirekt mit der DRI-Anlage (1), der Elektrolyseanlage (4) und dem elektrischen Versorgungsnetz (2) verbunden ist,
- **dass** der aktuelle Versorgungszustand (Z7) einen aktuellen Betriebszustand der Erzeugungseinrichtung umfasst,
- **dass** die Versorgungsbetriebsweise (B7) die Betriebsweise der Erzeugungseinrichtung umfasst,
- **dass** der finale erwartete Versorgungszustand (Z7') einen erwarteten finalen Betriebszustand der Erzeugungseinrichtung umfasst, der von der Steuereinrichtung (8) durch Fortschreibung des aktuellen Betriebszustands entsprechend der Betriebsweise der Erzeugungseinrichtung ermittelt wird, und
- **dass** das Variieren der Versorgungsbetriebsweise (B7) auch ein Variieren der Betriebsweise der Erzeugungseinrichtung umfasst.

10. Steuerprogramm für eine Steuereinrichtung (8) für ein Gesamtsystem,

- wobei das Gesamtsystem als Teilsysteme eine DRI-Anlage (1), eine Elektrolyseanlage (4), einen Wasserstoffspeicher (6) und eine Versorgungseinrichtung (7) umfasst,
- wobei die DRI-Anlage (1) und die Elektrolyseanlage (4) zur Übertragung elektrischer Energie direkt oder indirekt mit einem elektrischen Versorgungsnetz verbunden sind,
- wobei die DRI-Anlage (1), die Elektrolyseanlage (4) und der Wasserstoffspeicher (6) zum Transfer von Wasserstoff direkt oder indirekt miteinander verbunden sind,
- wobei die DRI-Anlage (1) und die Versorgungseinrichtung (7) zum Zuführen von Erdgas und/oder Ammoniak zur DRI-Anlage (1) miteinander verbunden sind,
- wobei das Steuerprogramm Maschinencode (10) umfasst, der von der Steuereinrichtung (8) abarbeitbar ist,
- wobei die Abarbeitung des Maschinencodes (10) durch die Steuereinrichtung (8) bewirkt, dass die Steuereinrichtung (8) das Gesamtsystem gemäß einem Betriebsverfahren nach einem der obigen Ansprüche steuert.

11. Steuereinrichtung für ein Gesamtsystem,

- wobei das Gesamtsystem als Teilsysteme eine DRI-Anlage (1), eine Elektrolyseanlage (4), einen Wasserstoffspeicher (6) und eine Versorgungseinrichtung (7) umfasst,
- wobei die DRI-Anlage (1) und die Elektrolyseanlage (4) zur Übertragung elektrischer Energie direkt oder indirekt mit einem elektrischen Versorgungsnetz verbunden sind,
- wobei die DRI-Anlage (1), die Elektrolyseanlage (4) und der Wasserstoffspeicher (6) zum Transfer von Wasserstoff direkt oder indirekt miteinander verbunden sind,
- wobei die DRI-Anlage (1) und die Versorgungseinrichtung (7) zum Zuführen von Erdgas und/oder Ammoniak zur DRI-Anlage (1) miteinander verbunden sind,
- wobei die Steuereinrichtung mit einem Steuerprogramm (9) nach Anspruch 10 programmiert ist, so dass die Steuereinrichtung bei Abarbeitung des Maschinencodes (10) des Steuerprogramms (9) das Gesamtsystem gemäß einem Betriebsverfahren nach einem der Ansprüche 1 bis 9 steuert.

12. Gesamtsystem,

- wobei das Gesamtsystem als Teilsysteme eine DRI-Anlage (1), eine Elektrolyseanlage (4), einen Wasserstoffspeicher (6) und eine Versorgungseinrichtung (7) umfasst,
- wobei die DRI-Anlage (1) und die Elektrolyseanlage (4) zur Übertragung elektrischer Energie direkt oder indirekt mit einem elektrischen Versorgungsnetz verbunden sind,
- wobei die DRI-Anlage (1), die Elektrolyseanlage (4) und der Wasserstoffspeicher (6) zum Transfer von Wasserstoff direkt oder indirekt miteinander verbunden sind,
- wobei die DRI-Anlage (1) und die Versorgungseinrichtung (7) zum Zuführen von Erdgas und/oder Ammoniak zur DRI-Anlage (1) miteinander verbunden sind,
- wobei das Gesamtsystem eine Steuereinrichtung (8) nach Anspruch 11 umfasst, die bei Abarbeitung des Maschinencodes (10) eines Steuerprogramms (9) von Anspruch 10 das Gesamtsystem gemäß einem Betriebsverfahren nach einem der Ansprüche 1 bis 9 steuert.

FIG 1

# FIG 2

| | |
|---|---|
| $Z = (Z1, Z4, Z6, Z7, ...)$ | S1 |
| $PP(t); t \in [0; PH]$ | S2 |
| $D(P1(t), P2(t), P3(t)); t \in [0; PH]$ | S3 |
| $B = (B1, B4, B6, B7, ...)$ | S4 |
| $Z' = (Z1', Z4', Z6', Z7', ...)$ | S5 |
| $K = K(B, Z')$ | S6 |
| $B:K \longrightarrow min$ | S7 |
| $B1 \longrightarrow 1; B4 \longrightarrow 4; B6 \longrightarrow 6; B7 \longrightarrow 7, ...$ | S8 |

S9

S10

S11

FIG 3

D(P1, P2, P3)

PP

1 4 5 6 11 14 7 7a 7b 8 9 10 2 3 3~

# FIG 4

$$Z = (Z1, Z4, Z6, Z7, Z11, ...)$$ — S21

$$PP(t); t \in [0; PH]$$ — S22

$$D (P1(t), P2(t), P3(t)); t \in [0; PH]$$ — S23

$$B = (B1, B4, B6, B7, B11, ...)$$ — S24

$$Z' = (Z1', Z4', Z6', Z7', Z11' ...)$$ — S25

$$K = K(B, Z')$$ — S26

$$B:K \longrightarrow \min$$ — S27

$$B1 \longrightarrow 1; B4 \longrightarrow 4; B6 \longrightarrow 6; B7 \longrightarrow 7; B11 \longrightarrow 11; ...$$ — S28

S29

S30

S31

EP 4 443 352 A1

## FIG 5

## FIG 6

| | | |
|---|---|---|
| 12: B: K → min  E = E12 | S41 |
| 13: B: K → min | S42 |
| E13 | S43 |
| E13 → 13 | S44 |

## FIG 7

| | |
|---|---|
| | S23 |
| | S51 |
| | S24 |

Europäisches Patentamt

European Patent Office

Office européen des brevets

# EUROPÄISCHER RECHERCHENBERICHT

**Nummer der Anmeldung**

**EP 23 16 6776**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/183022 A1 (HYBRIT DEV AB [SE]) 16. September 2021 (2021-09-16) * Seiten 3-5 * * Seite 6, Zeilen 8-20 * * Seite 9, Zeile 21 – Seite 9, Zeile 29 * * Seite 14, Zeile 26 – Seite 15, Zeile 11 * | 1-12 | INV. G06Q10/04 G06Q50/06 |
| A | US 2015/259760 A1 (EDER WOLFGANG [AT] ET AL) 17. September 2015 (2015-09-17) * Absatz [0018] * | 1-12 | |

_____

_____

**RECHERCHIERTE SACHGEBIETE (IPC)**

G06Q

Der vorliegende Recherchenbericht wurde für alle Patentansprüche erstellt

| Recherchenort | Abschlußdatum der Recherche | Prüfer |
|---|---|---|
| München | 1. September 2023 | Breidenich, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 23 16 6776

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-09-2023

| Im Recherchenbericht angeführtes Patentdokument | Datum der Veröffentlichung | Mitglied(er) der Patentfamilie | Datum der Veröffentlichung |
|---|---|---|---|
| WO 2021183022 A1 | 16-09-2021 | CA 3171104 A1 | 16-09-2021 |
| | | EP 4118244 A1 | 18-01-2023 |
| | | SE 2030072 A1 | 11-09-2021 |
| | | US 2023175086 A1 | 08-06-2023 |
| | | WO 2021183022 A1 | 16-09-2021 |
| US 2015259760 A1 | 17-09-2015 | CN 104662175 A | 27-05-2015 |
| | | CN 104662176 A | 27-05-2015 |
| | | CN 104662177 A | 27-05-2015 |
| | | EP 2895629 A1 | 22-07-2015 |
| | | EP 2895630 A2 | 22-07-2015 |
| | | EP 2895631 A2 | 22-07-2015 |
| | | ES 2689779 T3 | 15-11-2018 |
| | | FI 2895630 T3 | 15-08-2023 |
| | | JP 2015529751 A | 08-10-2015 |
| | | JP 2015532948 A | 16-11-2015 |
| | | JP 2015534604 A | 03-12-2015 |
| | | KR 20150053809 A | 18-05-2015 |
| | | KR 20150063075 A | 08-06-2015 |
| | | KR 20150065728 A | 15-06-2015 |
| | | US 2015259759 A1 | 17-09-2015 |
| | | US 2015259760 A1 | 17-09-2015 |
| | | US 2015329931 A1 | 19-11-2015 |
| | | WO 2014040989 A2 | 20-03-2014 |
| | | WO 2014040990 A2 | 20-03-2014 |
| | | WO 2014040997 A1 | 20-03-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 20190136300 A
- US 10354297 B2
- TW 201235124 A
- US 8288888 B2

**In der Beschreibung aufgeführte Nicht-Patentliteratur**

- Grüne Energieversorgung der Stahlindustrie. *Stahl und Eisen,* August 2022, 22-24
- **FLETCHER, R.** Practical Methods on Optimization. John Wiley Inc, 1987
- **HINTERMÜLLER, M. ; STADLER, G.** A semi-smooth Newton methods for linear-quadratic control problems. *Zeitschrift für angewandte Mathematik und Mechanik (ZAMM),* 2003, vol. 83-4, 219-237
- **ITO, K. ; KUNISCH, K.** Semi-smooth Newton methods for state-constrained optimal control problems. *Systems and Control Letters,* 2003, vol. 50, 221-228